(19) Europäisches Patentamt
European Patent Office
Office européen des brevets

(11) **EP 2 660 692 A1**

(12) **EUROPEAN PATENT APPLICATION**

(43) Date of publication:
**06.11.2013   Bulletin 2013/45**

(51) Int Cl.:
***G06F 3/048*** (2013.01)

(21) Application number: **12166115.1**

(22) Date of filing: **30.04.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **BlackBerry Limited**
**Waterloo, ON N2L 3W8 (CA)**

(72) Inventors:
• **Griffin, Jason Tyler**
**Waterloo, Ontario N2L 3W8 (CA)**

• **Pasquero, Jerome**
**Waterloo, Ontario N2L 3W8 (CA)**
• **Mckenzie, Donald Somerset**
**Waterloo, Ontario N2L 3W8 (CA)**
• **Hamilton, Alistair Robert**
**Waterloo, Ontario N2L 3W8 (CA)**

(74) Representative: **Patel, Binesh**
**Barker Brettell LLP**
**100 Hagley Road**
**Edgbaston**
**Birmingham**
**B16 8QQ (GB)**

(54) **Configurable touchscreen keyboard**

(57)     A method for configuring a virtual keyboard on a display, comprising: detecting a touch input associated with a location in the virtual keyboard on the display; adjusting, when the touch input is a designated touch gesture, a position of the virtual keyboard within a user interface screen in which the virtual keyboard is located in accordance with a direction of the touch input.

**FIG. 22C**

EP 2 660 692 A1

**Description**

## RELATED APPLICATION DATA

The present disclosure relates to commonly owned U.S. patent application no. 13/373,356, filed November 10, 2011, which is incorporated herein by reference in its entirety.

## TECHNICAL FIELD

The present disclosure relates generally to input methodologies for electronic devices, such as handheld electronic devices, and more particularly, to a configurable touchscreen keyboard.

## BACKGROUND

Increasingly, electronic devices, such as computers, netbooks, cellular phones, smart phones, personal digital assistants, tablets, etc., have touchscreens that allow a user to input characters into an application, such as a word processor or email application. Character input on touchscreens can be a cumbersome task due to, for example, the small touchscreen area, particularly where a user needs to input a long message.

## BRIEF DESCRIPTION OF THE DRAWINGS

Fig. 1 is an example block diagram of an electronic device, consistent with embodiments disclosed herein.
Fig. 2 is a flowchart illustrating an example method for predicting a selected set of characters, consistent with embodiments disclosed herein.
Figs. 3A, 3B, 3C, and 3D show example front views of a touchscreen, consistent with embodiments disclosed herein.
Figs. 4A and 4B show example front views of a touchscreen, consistent with embodiments disclosed herein.
Fig. 5 shows an example front view of a touchscreen, consistent with embodiments disclosed herein.
Figs. 6A, 6B, and 6C show example front views of a touchscreen, consistent with embodiments disclosed herein.
Fig. 7 shows an example front view of a touchscreen, consistent with embodiments disclosed herein.
Figs. 8A and 8B show example front views of a touchscreen, consistent with embodiments disclosed herein.
Fig. 9 shows an example front view of a touchscreen, consistent with embodiments disclosed herein.
Figs. 10A and 10B show example front views of a touchscreen, consistent with embodiments disclosed herein.
Figs. 11A and 11B show example front views of a touchscreen, consistent with embodiments disclosed herein.
Figs. 12A and 12B show example front views of a touchscreen, consistent with embodiments disclosed herein.
Figs. 13A and 13B show example front views of a touchscreen, consistent with embodiments disclosed herein.
Figs. 14A, 14B, and 14C show example front views of a touchscreen, consistent with embodiments disclosed herein.
Fig. 15 shows an example front view of a touchscreen, consistent with embodiments disclosed herein.
Fig. 16 shows an example front view of a touchscreen, consistent with embodiments disclosed herein.
Fig. 17 is a flowchart illustrating an example method, consistent with embodiments disclosed herein.
Fig. 18 is a flowchart illustrating an example method, consistent with embodiments disclosed herein.
Fig. 19 is a flowchart illustrating an example method, consistent with embodiments disclosed herein.
Fig. 20 shows an example front view of a virtual keyboard for display on a touchscreen, consistent with embodiments disclosed herein.
Fig. 21 is a flowchart illustrating an example method, consistent with embodiments disclosed herein.
Figs. 22A-22F show example front views of a user interface screen including a virtual keyboard displayed on a touchscreen, consistent with embodiments disclosed herein.
Fig. 23 illustrates a Cartesian dimensional coordinate system suitable for mapping locations of the touchscreen and determining a shape of the contact area of the user's finger in accordance with one embodiment of the present disclosure.
Figs. 24A-24E show example front views of a user interface screen including a virtual keyboard displayed on a touchscreen, consistent with embodiments disclosed herein.

## DESCRIPTION OF EXAMPLE EMBODIMENTS

Reference will now be made in detail to various embodiments, examples of which are illustrated in the accompanying drawings. Wherever possible, the same reference numbers will be used throughout the drawings to refer to the same or like parts.

The present disclosure relates to an electronic device, including wired communication devices (for example, a laptop computer having a touchscreen) and mobile or handheld wireless communication devices such as cellular phones, smartphones, wireless organizers, personal digital assistants, wirelessly enabled notebook computers, tablets, and similar devices. The electronic device can also be an electronic device without wireless communication capabilities, such as a handheld electronic game device, digital photograph album, digital camera, or other device.

Basic predictive text input solutions have been introduced for assisting with input on an electronic device. These solutions include predicting which word a user is entering and offering a suggestion for completing the word. But these solutions can have limitations, often requiring the user to input most or all of the characters in a word before the solution suggests the word the user is trying to input. Even then, a user often has to divert focus from the keyboard to view and consider the suggested word displayed elsewhere on the display of the electronic device, and thereafter, look back at the keyboard to continue typing. Refocusing of one's eyes relative to the keyboard while inputting information in an electronic device, particularly when composing large texts, can strain the eyes and be cumbersome, distracting, and otherwise inefficient. Moreover, processing cycles are lost and display power wasted as the processor is idling while the user is focusing attention to the input area, and then back at the virtual keyboard.

The efficiency of predictive text input solutions, from the perspective of both device resources and user experience, sometimes depends on the particular user and the nature of the interaction of the particular user with the touchscreen. Virtual keyboard usage patterns can be broadly categorized as being of two types: "rapid" and "precise". Rapid typists are typically fast two-thumb typists which rely on auto-correction. This usage pattern corresponds most closely with experienced, frequent touchscreen users. Precise typists are typically careful typists who are inclined to use a single finger point to tap keys in the virtual keyboard, and often choose predictions as an input accelerator rather than auto-correction. This usage  pattern corresponds most closely with novice/new touchscreen users as well as potentially one-handed (thumb) use situations.

Accordingly, example embodiments described herein permit the user of an electronic device to input characters without diverting attention from the keyboard and subsequently refocusing. Example embodiments described herein also seek to accommodate different user types, such as rapid typists and precise typists, and the different efficiency challenges presented by the different user types.

Use of the indefinite article "a" or "an" in the specification and the claims is meant to include one or more than one of the feature that it introduces, unless otherwise indicated. Thus, the term "a set of characters" as used in "generating a set of characters" can include the generation of one or more than one set of characters. Similarly, use of the definite article "the", or "said," particularly after a feature has been introduced with the indefinite article, is meant to include one or more than one of the feature to which it refers (unless otherwise indicated). Therefore, the term "the generated set of characters" as used in "displaying the generated set of characters" includes displaying one or more generated set of characters. References to orientation contained herein, such as horizontal and vertical, are relative to the screen orientation of a graphical user interface rather than any physical orientation.

In accordance with one embodiment, there is provided a method comprising receiving an input of a character from a virtual keyboard displayed on a display; generating one or more sets of predicted input characters based on the input character; and displaying one or more of the generated sets of predicted input characters.

In accordance with one embodiment, there is provided a method for configuring a virtual keyboard on a display, comprising: detecting a touch input associated with a location in the virtual keyboard on the display; adjusting, when the touch input is a designated touch gesture, a position of the virtual keyboard  within a user interface screen in which the virtual keyboard is located in accordance with a direction of the touch input.

In a further embodiment, an electronic device is provided that comprises a display having a virtual keyboard displayed thereupon, and a processor. The processor can be configured to perform methods described herein.

In a further embodiment, a keyboard displayed on a display of an electronic device is provided. The keyboard can include a plurality of keys, each key corresponding to one or more different characters of a plurality of characters. The keyboard is configured to perform methods described herein in response to receiving an input.

In a further embodiment, a non-transitory computer-readable storage medium is provided that includes computer executable instructions for performing methods described herein.

These example embodiments, as well as those described below, permit the user of an electronic device to input a set of characters without diverting attention from the virtual keyboard and subsequently refocusing. Predicting and providing various options that the user is likely contemplating, and doing so at appropriate locations on the keyboard, allows the focus to remain on the keyboard, which enhances efficiency, accuracy, and speed of character input.

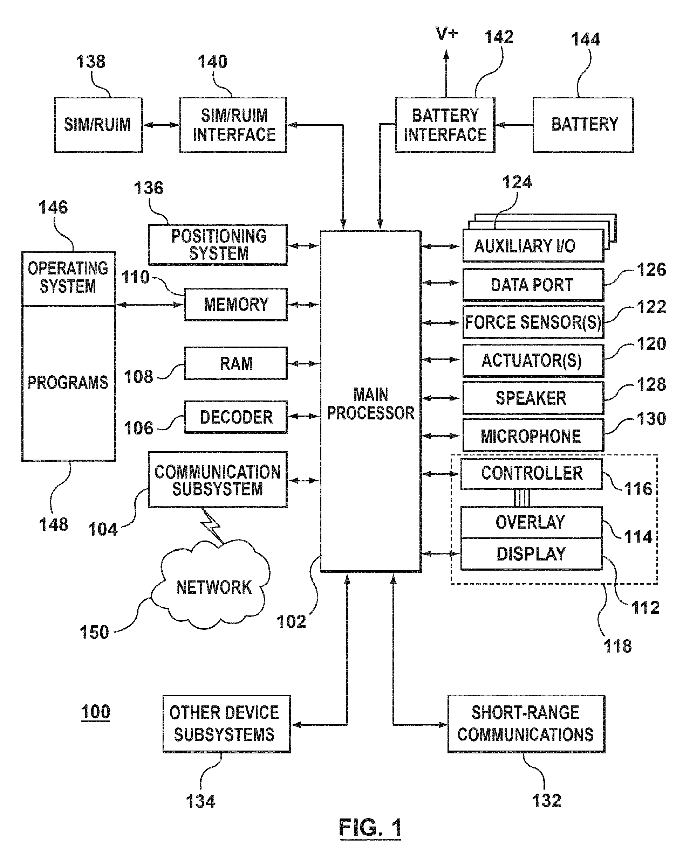

Fig. 1 is a block diagram of an electronic device 100, consistent with example embodiments disclosed herein. Electronic device 100 includes multiple components, such as a main processor 102 that controls the overall operation of electronic device 100. Communication functions, including data and voice communications, are performed through a communication subsystem 104. Data received by electronic device 100 is decompressed and decrypted by a decoder 106. The communication subsystem 104 receives messages from and sends messages to a network 150. Network 150 can be any type of network, including, but not limited to, a wired network, a data wireless network, voice wireless network, and dual-mode wireless networks that support both voice and data communications over the same physical base stations. Electronic device 100 can be a battery-powered device and include a battery interface 142 for receiving one or more batteries 144.

Main processor 102 is coupled to and can interact with additional subsystems such as a Random Access Memory (RAM) 108; a memory 110, such as a hard drive, CD, DVD, flash memory, or a similar storage device; one or more actuators 120; one or more force sensors 122; an auxiliary input/output (I/O) subsystem 124; a data port 126; a speaker 128; a microphone 130; short-range communications 132; other device subsystems 134; and a touchscreen 118.

Touchscreen 118 includes a display 112 with a touch-active overlay 114 connected to a controller 116. User-interaction with a graphical user interface (GUI), such as a virtual keyboard rendered and displayed on the display 112 as a GUI for input of characters, or a web-browser, is performed through touch-active overlay 114. Main processor 102 interacts with touch-active overlay 114 via controller 116. Characters, such as text, symbols, images, and other items are displayed on display 112 of touchscreen 118 via main processor 102. Characters are inputted when the user touches the touchscreen at a location associated with said character.

Touchscreen 118 is connected to and controlled by main processor 102. Accordingly, detection of a touch event and/or determining the location of the touch event can be performed by main processor 102 of electronic device 100. A touch event includes in some embodiments, a tap by a finger, a swipe by a finger, a swipe by a stylus, a long press by finger or stylus, or a press by a finger for a predetermined period of time, and the like.

While specific embodiments of a touchscreen have been described, any suitable type of touchscreen for an electronic device can be used, including, but not limited to, a capacitive touchscreen, a resistive touchscreen, a surface acoustic wave (SAW) touchscreen, an embedded photo cell touchscreen, an infrared (IR) touchscreen, a strain gauge-based touchscreen, an optical imaging touchscreen, a dispersive signal technology touchscreen, an acoustic pulse recognition touchscreen or a frustrated total internal reflection touchscreen. The type of touchscreen technology used in any given embodiment will depend on the electronic device and its particular application and demands.

Main processor 102 can also interact with a positioning system 136 for determining the location of electronic device 100. The location can be determined in any number of ways, such as by a computer, by a Global Positioning System (GPS), either included or not included in electric device 100, through a Wi-Fi network, or by having a location entered manually. The location can also be determined based on calendar entries.

Main processor 102 can also interact with an orientation sensor 197 for sensing the orientation of the device. In some examples, the orientation sensor 197 may be one or more accelerometers. In some examples, the orientation sensor may detect acceleration along multiple orthogonal axes. Main processor 102 can also interact with one or more proximity sensors 198 for detecting the proximity of nearby objects. In some examples, the proximity sensor may be one or more infrared emitter/sensor pairs. The main processor 102 can also interact with an ambient light sensor 199 for detecting the intensity and/or color temperature of ambient light.

In some embodiments, to identify a subscriber for network access, electronic device 100 uses a Subscriber Identity Module or a Removable User Identity Module (SIM/RUIM) card 138 inserted into a SIM/RUIM interface 140 for communication with a network, such as network 150. Alternatively, user identification information can be programmed into memory 110.

Electronic device 100 also includes an operating system 146 and programs 148 that are executed by main processor 102 and are typically stored in memory 110. Additional applications may be loaded onto electronic device 100 through network 150, auxiliary I/O subsystem 124, data port 126, short-range communications subsystem 132, or any other suitable subsystem.

A received signal such as a text message, an e-mail message, or web page download is processed by communication subsystem 104 and this processed information is then provided to main processor 102. Main processor 102 processes the received signal for output to display 112, to auxiliary I/O subsystem 124, or a combination of both. A user can compose data items, for example e-mail messages, which can be transmitted over network 150 through communication subsystem 104. For voice communications, the overall operation of electronic device 100 is similar. Speaker 128 outputs audible information converted from electrical signals, and microphone 130 converts audible information into electrical signals for processing.

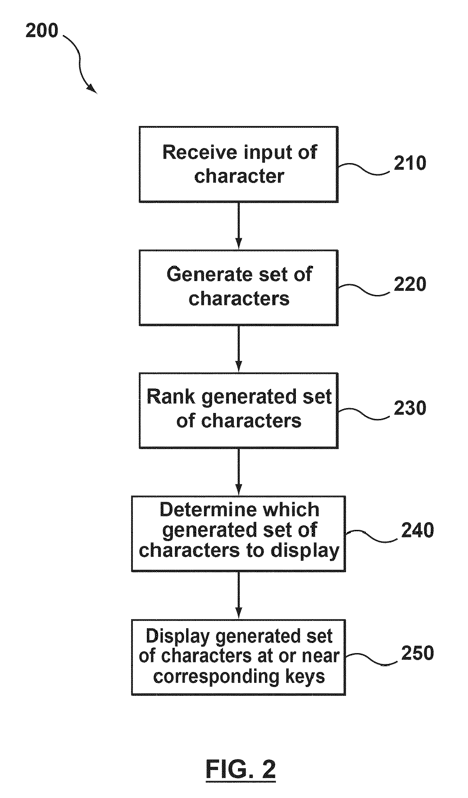

Fig. 2 is a flowchart illustrating an example method 200 for predicting a set of characters, consistent with example embodiments disclosed herein. As used herein, a predictor (such as a predictive algorithm, program or firmware) includes a set of instructions that when executed by a processor (for example, main processor 102), can be used to disambiguate for example, received ambiguous text input and provide various options, such as a set of characters (for example, words or phrases, acronyms, names, slang, colloquialisms, abbreviations, or any combination thereof) that a user might be contemplating. A predictor can also receive otherwise unambiguous text input and predict a set of characters potentially contemplated by the user based on several factors, such as context, frequency of use, and others as appreciated by those skilled in the field. The predictor may predict a set of characters which completes a received text input (known as auto-completion), correct received text input (known as auto-correction), or a combination thereof (e.g.,

completing the text input while correcting previously entered text input).

For example, in the predictor is a program 148 residing in memory 110 of electronic device 100. Accordingly, method 200 includes a predictor for generating a set of characters corresponding to a subsequent candidate input character based on inputted characters. It can be appreciated that while the example embodiments described herein are directed to a predictor program executed by a processor, the predictor can be executed by a virtual keyboard controller.

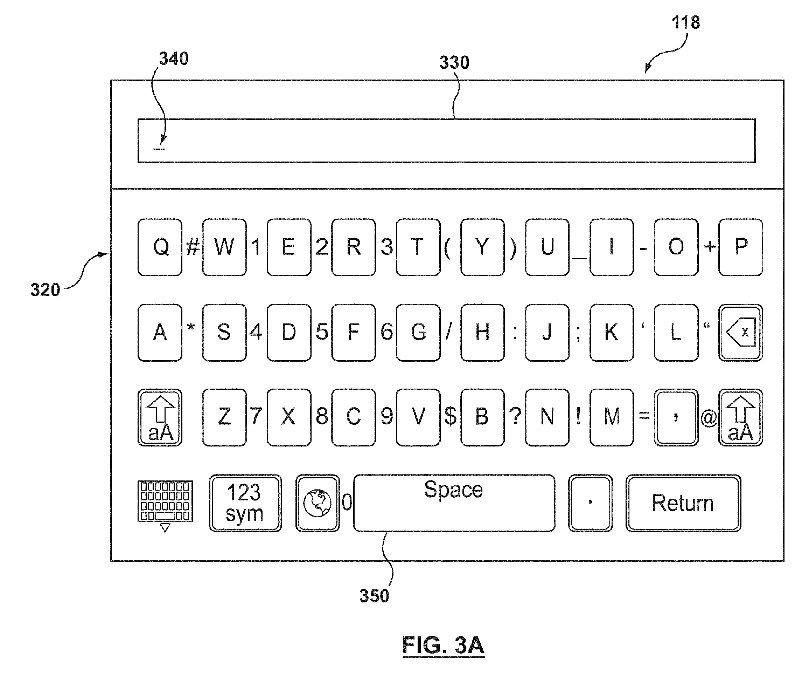

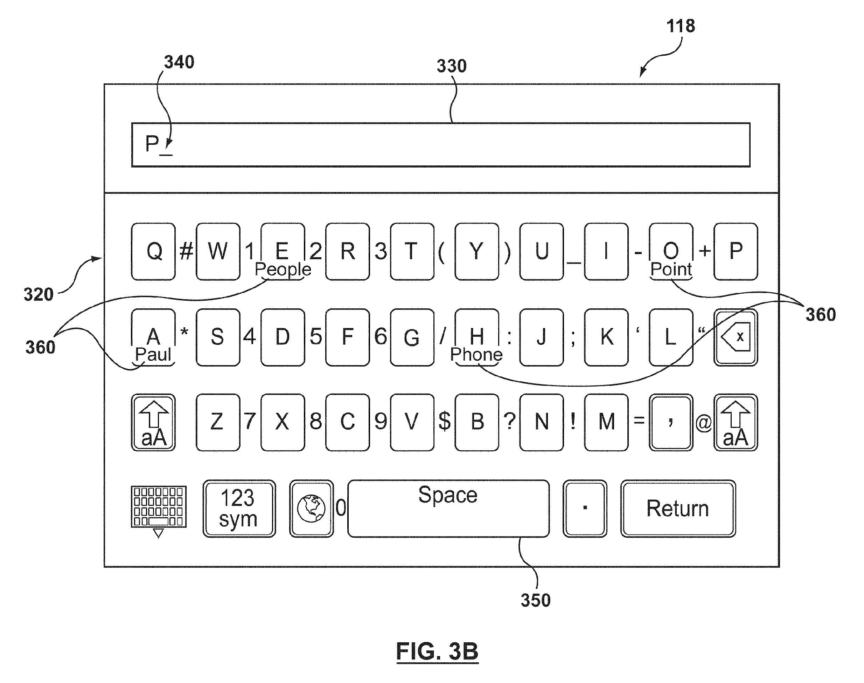

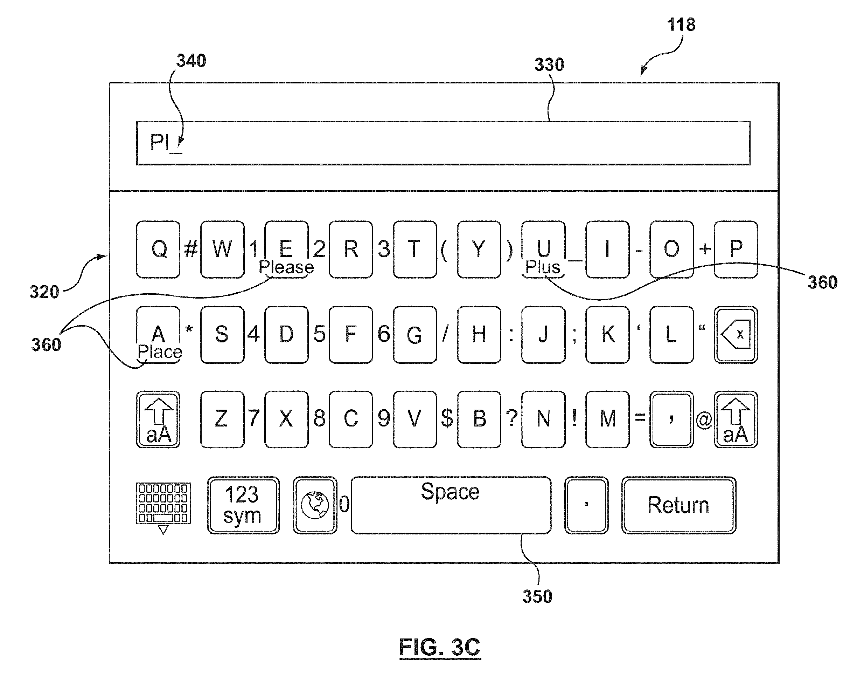

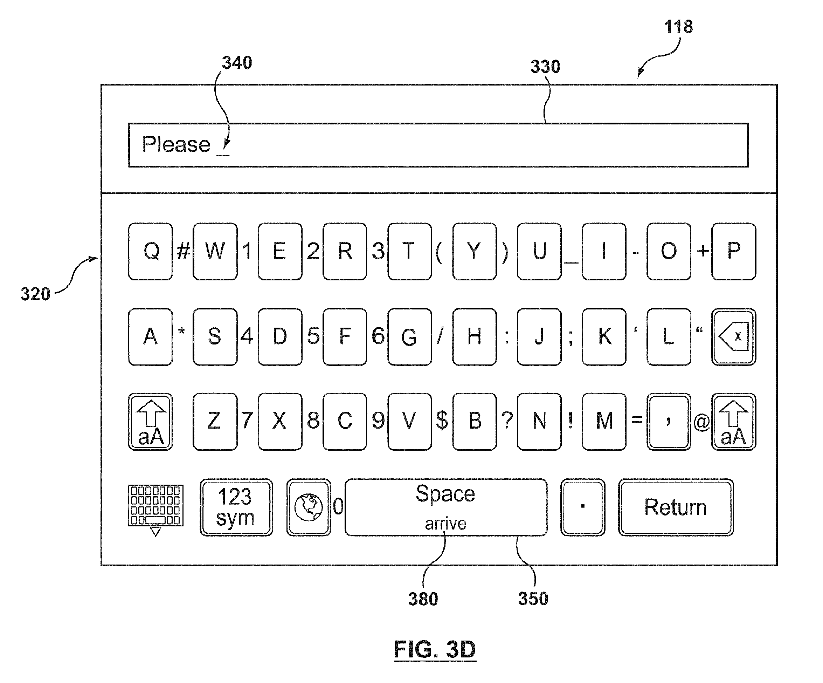

Method 200 begins at block 210, where the processor receives an input of one or more characters from a virtual keyboard displayed on a touchscreen. As used herein, however, a character can be any alphanumeric character, such as a letter, a number, a symbol, a punctuation mark, and the like. The inputted character can be displayed in an input field (for example, input field 330 further described below in Figs. 3-9) that displays the character the user inputs using the virtual keyboard.

At block 220, the processor generates one or more sets of characters such as words or phrases, acronyms, names, slang, colloquialisms, abbreviations, or any combination thereof based on the input received in block 210. The set of characters includes, for example, a set of characters that are stored in a dictionary (for example, a word or an acronym) of a memory of the electronic device, a set of characters that were previously inputted by user (for example, a name or acronym), a set of characters based on a hierarchy or tree structure, a combination thereof, or any set of characters that are selected by a processor based on defined arrangement.

In some embodiments, the processor can use contextual data for generating a set of characters. Contextual data considers the context of characters in the input field. Contextual data can include information about, for example, set of characters previously inputted by the user, grammatical attributes of the characters inputted in the input field (for example, whether a noun or a verb is needed as the next set of characters in a sentence), or any combination thereof. For example, if the set of characters "the" has already been inputted into display, the processor can use the contextual data to determine that a noun-instead of a verb-will be the next set of characters after "the". Likewise, if the set of characters "Guy Lafleur played in the National Hockey" was inputted, based on the context, the processor can determine the subsequent set of characters is likely "League". Using the contextual data, the processor can also determine whether an inputted character was incorrect. For example, the processor can determine that the inputted character was supposed to be a "w" instead of an "a", given the proximity of these characters on a QWERTY virtual keyboard.

Processor 102 can also include an affix as part of the set of characters, such as an adverb ending, an adjective ending, different verb tenses, and the like, or any other change to make a complete set of characters. Processor 102 can also use the received input to generate affixes, such as plural endings or plural forms. Any known predictive technique or software can be used to process the received input and the contextual data in generating set of characters at block 220.

In some example embodiments, the set of characters generated at block 220 can begin with the same character received as input at block 210. For example, if the characters "pl" have been received as input using a virtual keyboard, these characters will be received by the processor as the input. In these embodiments, the set of characters generated at block 220 would all begin with "pl", such as "please" or "plot." There is no limit on the length of a generated set of characters. Regarding affixes, if the user has input the characters "child", for example, the affixes generated at block 220 could include "-ren", to make the set of characters "children", or "-ish", to make the set of characters "childish".

In some example embodiments, the set of characters generated at block 220 can simply include the same characters received as input at block 210. For example, if the received input is an "x," the processor may generate "example" or "xylophone" as the set of characters. Such sets of characters can be generated using the contextual data.

In another example embodiment, if input has not been received or a delimiter (such as a <SPACE>) has been used, the generated set of characters can be placed on subsequent candidate input characters that correspond to the first letter of the generated set of characters.

Next, at block 230, the generated set of characters from block 220 can be ranked. The rankings reflect the likelihood that a candidate set of characters might have been intended by the user, or might be chosen by a user compared to another candidate set of characters.

In some embodiments, contextual data can be included in the ranking at block 230. In some embodiments, the electronic device can be configured to rank nouns or adjectives higher based on the previous inputted set of characters. If the inputted set of characters is suggestive of a noun or adjective, the processor, using the contextual data, can rank the nouns or adjectives corresponding to what the user is typing higher at block 230. In an additional embodiment, set of characters including adjective affixes (such as "-ish" or "-ful"), phrases, plurals, or combinations thereof can also be ranked. Contextual data can increase the likelihood that the higher ranked generated set of characters is intended by a user. In some embodiments, contextual data can include information about which programs or applications are currently running or being used by a user. For example, if the user is running an email application, then set of characters associated with that user's email system, such as set of characters from the user's contact list, can be used to determine the ranking. N-grams, including unigrams, bigrams, trigrams, and the like, can be also used in the ranking of the sets of characters. Alternatively, the geolocation of the electronic device or user can be used in the ranking process. If, for example, the electronic device recognizes that a user is located at his/her office, then sets of characters generally associated with work can be ranked higher in the list. If, on the other hand, the device determines a user is at the beach, then sets of characters generally associated with the beach can be ranked higher in the list.

At block 240, the processor determines which of the set of characters to display based on the ranking. For example, higher ranked sets of characters are more likely to be determined that they should be displayed. A ranker (such as a ranking algorithm, program or firmware) includes a set of instructions that when executed by a processor (for example, main processor 102), can be executed to determine ranking in this regard. In some embodiments, the ranker is a program 146 residing in memory 110 of electronic device 100.

At block 250, the determined set of characters is displayed at a location on the keyboard corresponding to a subsequent candidate input character, predicted as the next character in a word that the user might input. For instance, if a user inputs "pl", the word "please" would be displayed on the key for the letter "e"-the subsequent candidate input character for that word. Similarly, the word "plus" would also be displayed on the key for the letter "u"-another subsequent candidate input character. The subsequent candidate input character can be any alphanumeric character, such as a letter, number, symbol, punctuation mark, and the like.

In some embodiments, the generated set of characters is displayed at or near keys on the virtual keyboard associated with the subsequent candidate input characters. Its placement at or near a key can depend, for instance, on the size of the word or the number of nearby subsequent candidate input characters and the size of their associated set of characters.

The set of characters can be displayed in a manner that will attract the user's attention. In some embodiments, a displayed set of character's appearance can be enhanced or changed in a way that makes the set more readily visible to the user. For example, displayed sets of characters can be displayed with backlighting, highlighting, underlining, bolding, italicizing, using combinations thereof, or in any other way for making the displayed set of characters more visible.

When identifying the set of characters for display at block 240, the processor can limit the displayed set of characters to the top few or choose among the higher ranked sets of characters. For example, if two sets of characters are both ranked high, and these sets of characters would otherwise be displayed at the same key, the electronic device could be configured to display only the highest ranked generated set of characters. In other embodiments, both sets of characters could be displayed at or around the same key, or one set of characters is displayed at one key while the second set of characters is displayed at another key. In some example embodiments, the processor can take into account the display size to limit the number of generated sets of characters.

In some embodiments, the ranking could be used to choose between two or more sets of characters that, when displayed on adjacent subsequent candidate input characters, would overlap with each other (e.g., because of their respective lengths). In such a scenario, the electronic device could be configured to display the higher ranked set of characters on the keyboard. For example, if the set of characters "establishment" is ranked first in a list generated at block 240 after the letter "E" is inputted, "establishment" could be displayed at the "S" key. When displayed on a virtual keyboard, however, its length might occupy some space on the "A" key and the "D" key, potentially blocking a set of characters that would be displayed on or around those keys. At block 240, it could be determined that "establishment" would be displayed fully, and no other set of characters would be placed at the "A" or "D" keys ahead of the first ranked set of characters "establishment." An alternative to displaying only the top ranked set of characters would be to use abbreviations or recognized shortened forms of the set of characters, effectively permitting a long set of characters to be displayed within or mostly within the boundaries of a single key simultaneously with other sets of characters on adjacent keys of a virtual keyboard.

Figures 3-9 illustrate a series of example front views of the touchscreen 118 having a virtual keyboard 320, consistent with example embodiments disclosed herein. Starting with Fig. 3A, touchscreen 118 includes a virtual keyboard 320 that is touch-active. The position of the virtual keyboard 320 is variable such that virtual keyboard 320 can be placed at any location on touchscreen 118. Touchscreen 118 could be configured to detect the location and possibly pressure of one or more objects at the same time. Touchscreen 118 includes two areas: (1) an input field 330 that displays characters after a user has inputted those characters and (2) the virtual keyboard 320 that receives the input from the user. As described throughout this disclosure, a virtual keyboard displays a set of characters at a location on the keyboard corresponding to a subsequent candidate input character that might be received as input from the user.

The examples and embodiments illustrated in Figures 3-9 can be implemented with any set of characters, such as words, phrases, acronyms, names, slang, colloquialisms, abbreviations, or any combination thereof.

As shown in Fig. 3A, touchscreen 118 displays a standard QWERTY virtual keyboard 320; however, any conventional key configuration can be displayed for use in the device, such as AZERTY, QWERTZ, or a layout based on the International Telecommunication Union (ITU) standard (ITU E.161) having "ABC" on key 2, "DEF" on key 3, and so on. Virtual keyboard 320 includes space key 350 as well as other keys that can provide different inputs, such as punctuation, letters, numbers, enter or return keys, and function keys. While virtual keyboard 320 is shown as having a square shape, it can have any other shape (such as an arch).

As shown in Fig. 3A, touchscreen 118 displays input field 330, which displays the characters the user inputs using virtual keyboard 320. Input field 330 includes a cursor 340, which can be an underscore (as shown) or any other shape, such as a vertical line. Cursor 340 represents the character space where a next inputted character, selected character, or selected set of characters will be inserted.

As shown in Fig. 3B, when a user inputs a character (in this example, "P"), this character is displayed in input field 330 and cursor 340 moves to the character space where the next inputted character or word will be inserted. After the character is inputted, a predictor (such as, a predictive algorithm or a circuit) can generate set of characters 360 (for this embodiment) that all begin with the character "P", or characters if more than one character is input. The generated set of characters are displayed at a location on the keyboard corresponding to a subsequent candidate input character that might be received as input from the user. As mentioned, generated set of characters 360 can be displayed at or near the key corresponding to the subsequent candidate input characters (for example, under the respective A, E, H, and O keys of the virtual keyboard 320). Indeed, slightly shifting the display location of the generated set of characters can address overcrowding of subsequent candidate input characters, effectively permitting more set of characters to be displayed.

In the example shown in Fig. 3B, "P" is received as input and a predictor generates several set of characters 360, which are displayed at keys corresponding to each generated set of characters' subsequent candidate input character. As shown in Fig. 3B, "People" is placed at the "E" key because the next letter after "P" of "People" is "E"; "Paul" will be place at the "A" key because the next letter after "P" of "Paul" is "A"; "Phone" will be placed at the "H" key because the next letter after "P" of "Phone" is "H"; and so on. It should be noted that any of the letters in the set of characters can be upper case or lower case.

In the embodiment shown in Fig. 3C, "L" is next input received by touchscreen, and a predictor determines several generated set of characters 360, which are displayed at a key corresponding to subsequent candidate input characters (for example, under the respective A, E, and U keys of the virtual keyboard 320), for the current position of cursor 340, which is in the third character position, as shown in input field 330. In another embodiment, a generated set of characters 360 can be presented such as to include the subsequent candidate input character. For example, the set of characters "Please" can be displayed so that the characters "Pl" are displayed before the "E" character on the "E" key, and the characters "ase" can be placed after the "E" character on the "E" key. Further, in this or other embodiments, the displayed "E" can be presented in a manner that differs from the "Pl" and "ase", thereby enabling the user to still recognize it as the "E" key while also making it readily visible so that the user can either input the generated set of characters "Please" or input the character "E". The "E" can be capitalized or in lowercase. In other embodiments, an affix can be displayed at the key. Using the example of the set of characters "Please" above, the "ase" could be displayed at the "E" key so the set of characters fragment "-ease" or "-Ease" would appear.

If the user inputs a generated set of characters, that set of characters is placed in input field 330. This can be seen in Fig. 3D, where the user has inputted generated set of characters "Please," resulting in its placement in the input field. A space is inserted after the set of characters if the user wants to input a new set of characters. A user could input a generated set of characters in various ways, including in a way that differs from a manner of inputting a character key. For example, to input a generated set of characters, a user could use a finger or stylus to swipe the generated set of characters. As used herein, swiping includes swiping the set of characters itself or swiping or touching near the set of characters. For the latter embodiment, the device can detect a swipe or touch near a set of characters, be it a generated set of characters or a predicted set of characters (to be described below), and through the use of a predictor, determine the set of characters the user intended to input. In another embodiment, the user could press a key for a predetermined period of time, such as a long press. That key can be, for example, the key corresponding to the subsequent candidate input character of the set of characters. So, if the set of characters "Please" is intended to be inputted instead of "E", the electronic device 100 can be configured to require that the "E" key be pressed for a predetermined period of time to trigger the input of "Please".

After a generated set of characters 360 has been determined, as shown in Fig. 3D, a predicted set of characters 380 can be displayed, shown here at space key 350. Predicted set of characters 380 can differ from generated set of characters 360 (as shown in Figs. 3A-3C) and is the system's attempt to predict the next set of characters a user might be contemplating. A predictor is used to determine predicted set of characters 380. As with displayed generated set of characters 360, predicted set of characters 380 can be received as input in any number of ways, including receiving a swiping of the predicted set of characters with a finger or stylus or receiving a pressing of a key (such as the space key or another designated key) for a predetermined period of time (long press).

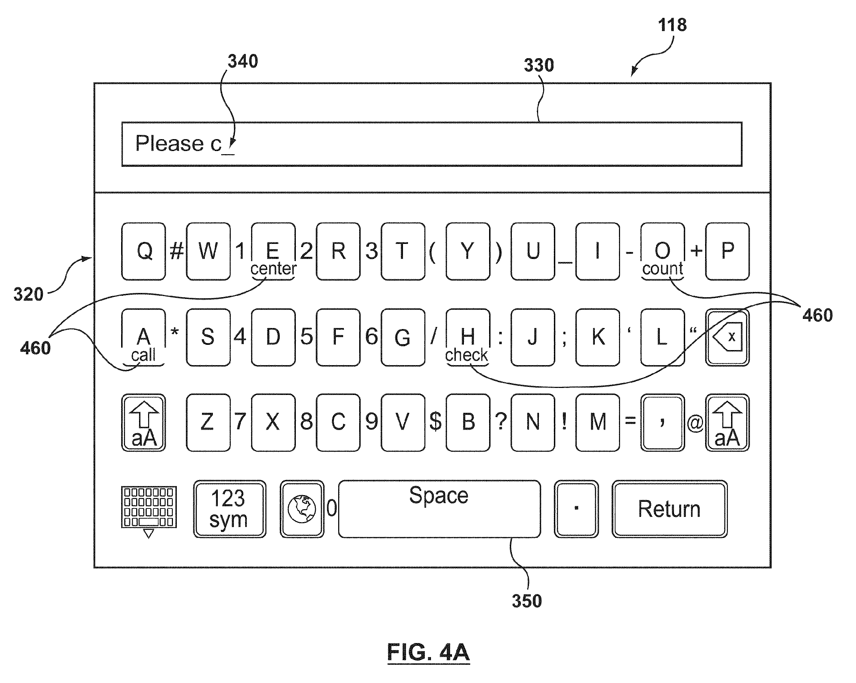

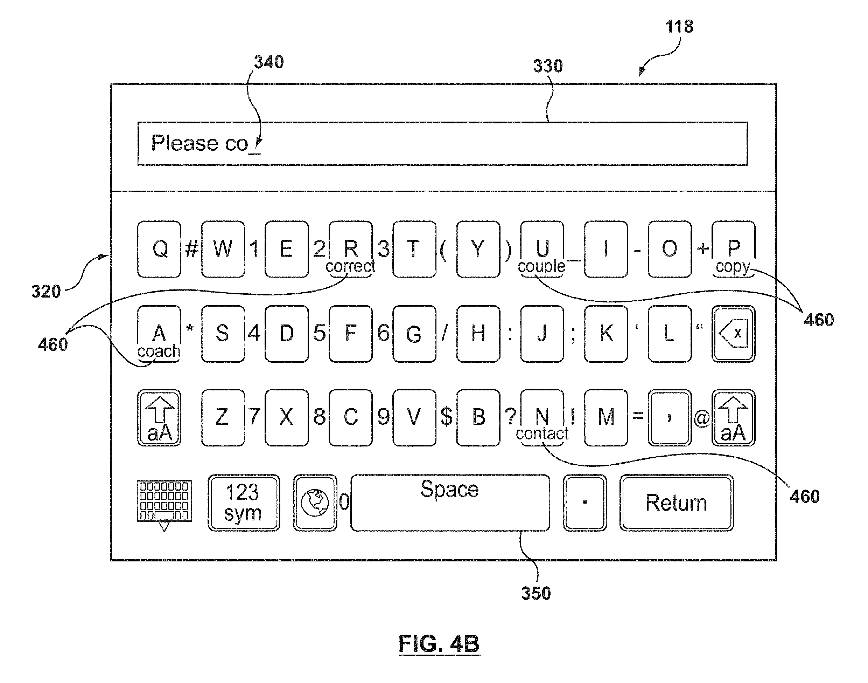

In Fig. 4A, electronic device 100 receives "C" as input from virtual keyboard 320. Again, a predictor determines generated set of characters 460 based in part on the received input. In Fig. 4B, electronic device 100 receives "O" as input from the virtual keyboard and outputs the "O" in input field 330. As shown in Fig. 4A, the set of characters "count" was displayed at the "O" key after the input of the "C" character was received. Since the "O" key was pressed in a manner to only input the "O" character, as shown in Fig. 4B, an "O" is displayed as second character of the currently inputted set of characters, and the set of characters "count" is not inputted by the user. Alternatively, if a user wanted to input the generated set of characters "count," the user can input the "O" key in Fig. 4A in a manner different from a manner of inputting the "O" key, such as by swiping the set of characters "count" or by a long press on the "O" key, as opposed to tapping. Returning to Fig. 4B, after the "O" is inputted, generated set of characters 460 are displayed at the keys corresponding to subsequent candidate input characters, as shown in Fig. 4B.

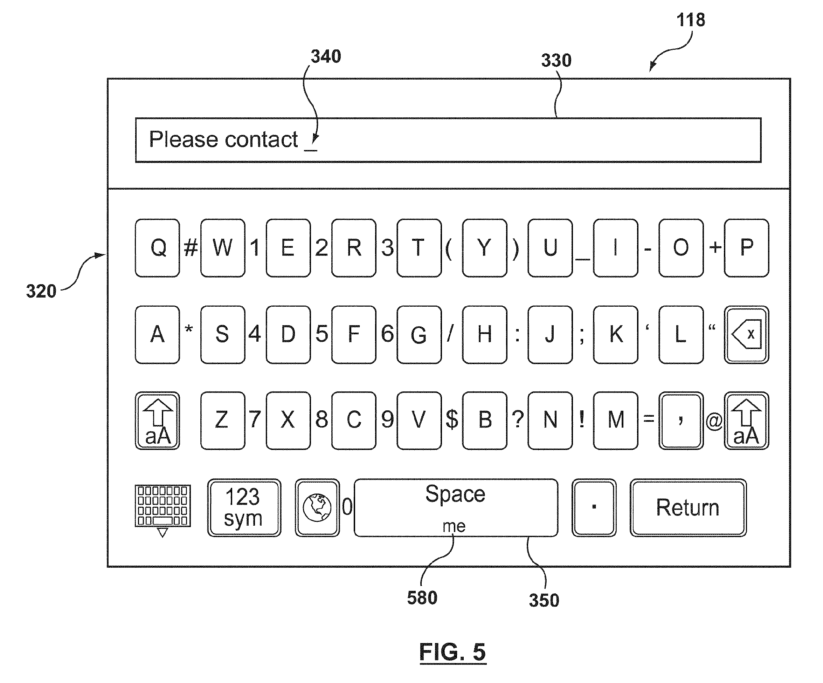

Fig. 5 shows input field 330 displaying the set of characters "contact" followed by a space. In that instance, the user inputted the generated set of characters "contact" 460 as was shown in Fig. 4B at the "N" key. Referring back to Fig. 5, a <SPACE> character is now automatically inserted after the generated word in the input field. Predicted word "me" 580 is now displayed on space key 350.

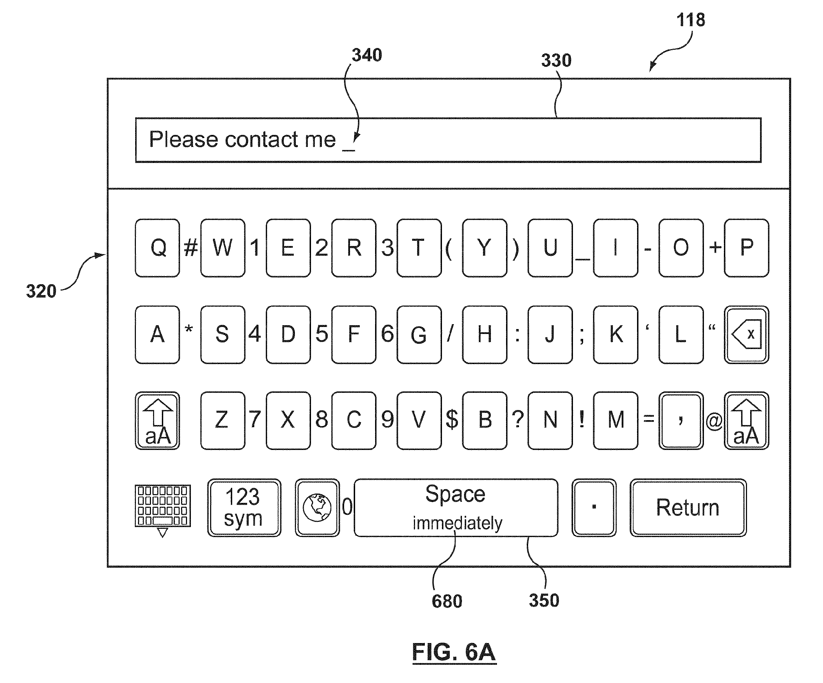

If the predicted word "me" 580 is received as input, the word "me" 580 is then displayed in input field 330 followed by a space as shown in Fig. 6A, which then shows predicted word 680 "immediately" displayed on space key 350. The predicted word is presented after a completed word and space have been displayed in input field 330.

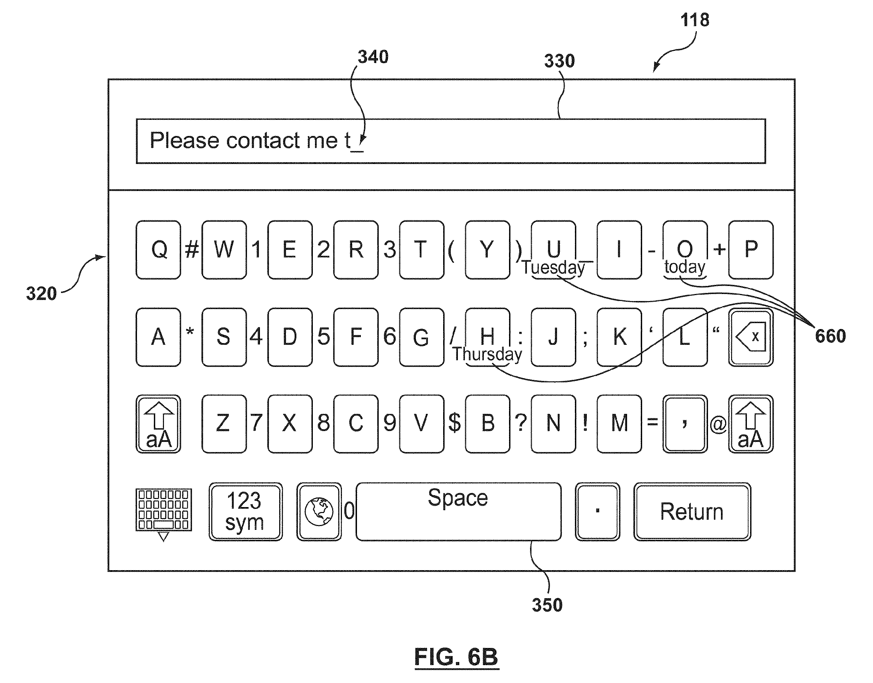

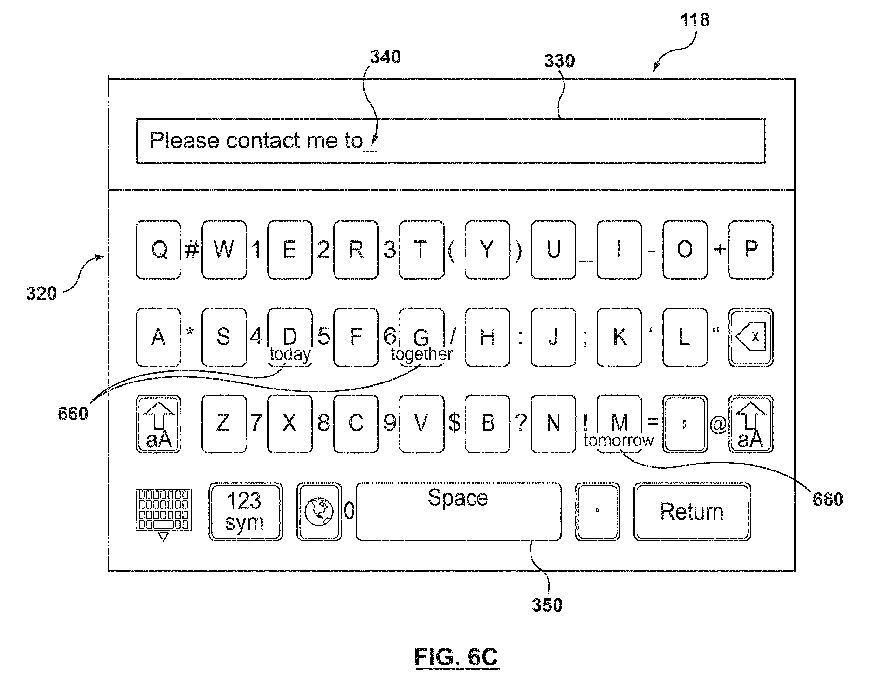

Fig. 6B shows an example where touchscreen 118 has received the "T" character as input after the user has pressed the "T" key. In this scenario, touchscreen 118 displays a "t" in input field 330. Generated set of characters 660 (for example, "Tuesday," "today," and "Thursday") are displayed at the keys of the subsequent candidate input characters. Fig. 6C shows an example where electronic device 100 has received the "o" character as input after the user presses the "O" key instead of inputting generated set of characters 660 "today" as was shown in Fig. 6B. Thus, "o" is now displayed in input field 330.

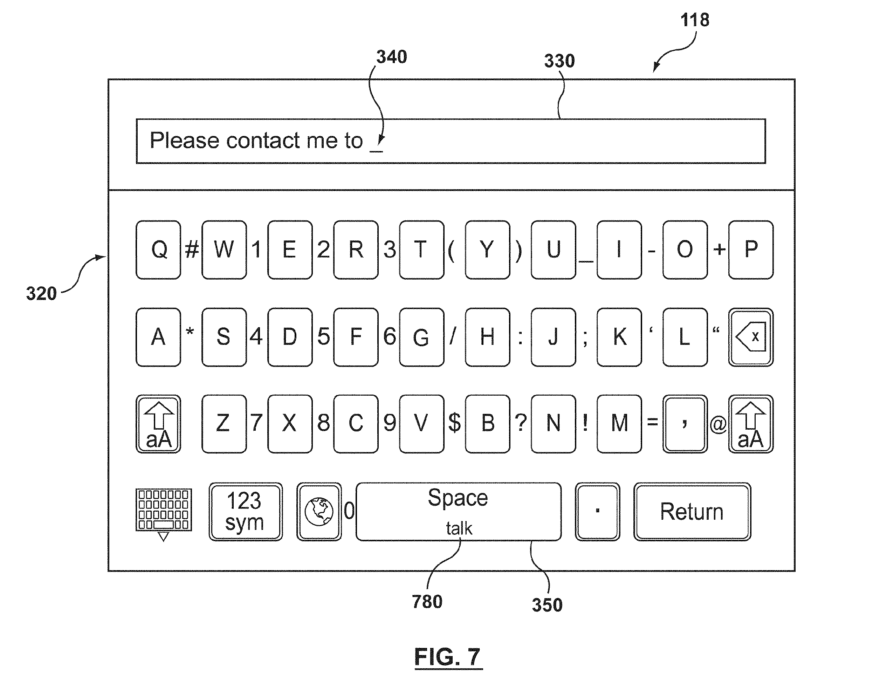

Fig. 7 shows an example where touchscreen 118 has received the <SPACE> character as input after the user selects the space key. In this scenario, touchscreen 118 inserts a <SPACE> character, and then displays predicted set of characters "talk" 780 at space key 350.

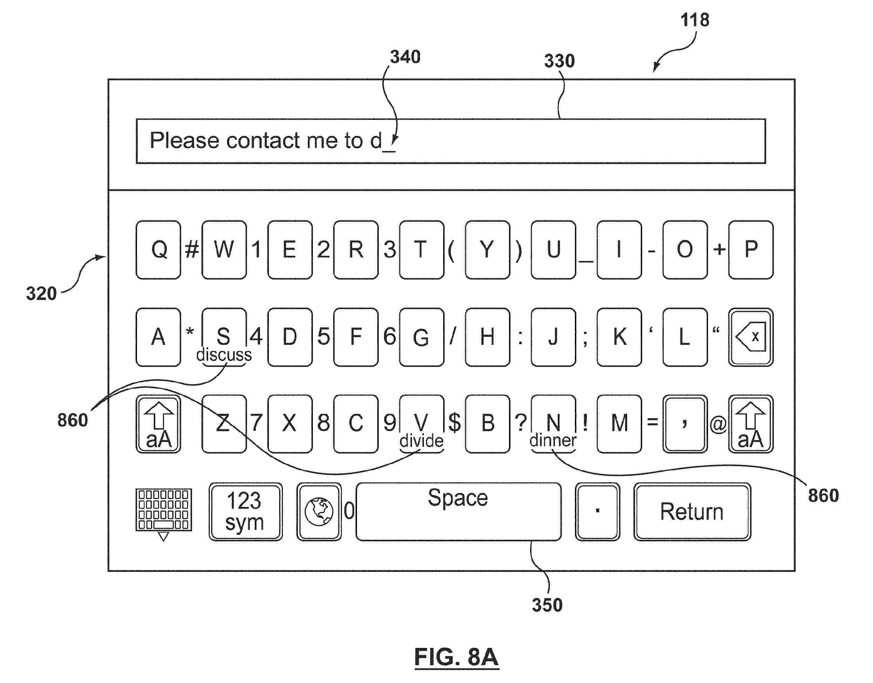

Fig. 8A shows an example where touchscreen 118 has received the "d" character as input after the user presses the "D" key. In this scenario, touchscreen 118 displays a "d" in the input field 330 and displays generated set of characters "discuss," "divide," and "dinner" 860 on keys corresponding to subsequent candidate input characters. In this example embodiment, while the character "I" was never received as input, electronic device 100 determined that generated set of characters "discuss," "divide," and "dinner" 860 were the set of characters to be displayed on touchscreen. In this embodiment, because each of these set of characters has "i" as its second letter, touchscreen 118 displayed generated set of characters using a further subsequent letter in the set of characters (for example, "discuss" under the "S" key, "divide" under the "V" key, and "dinner" under the "N" key). In other embodiments, generated set of characters "discuss," "divide," and "dinner" 860 can be displayed at or near the "I" key.

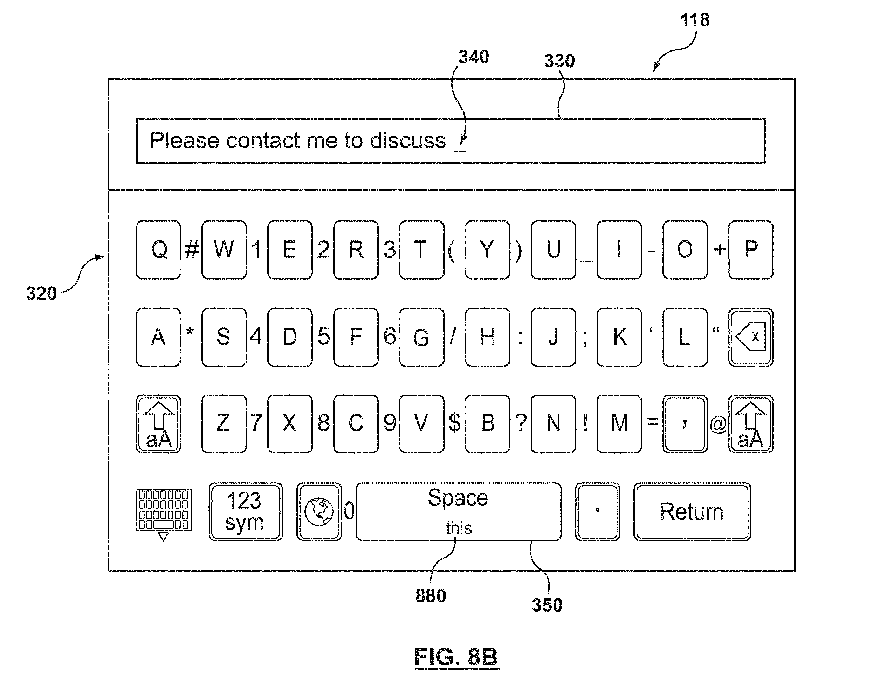

Fig. 8B shows an example where touchscreen 118 has received the set of characters "discuss" as input after the user chooses generated set of characters "discuss" 860. In this example, touchscreen 118 displays predicted set of characters "this" 880 at space key 350.

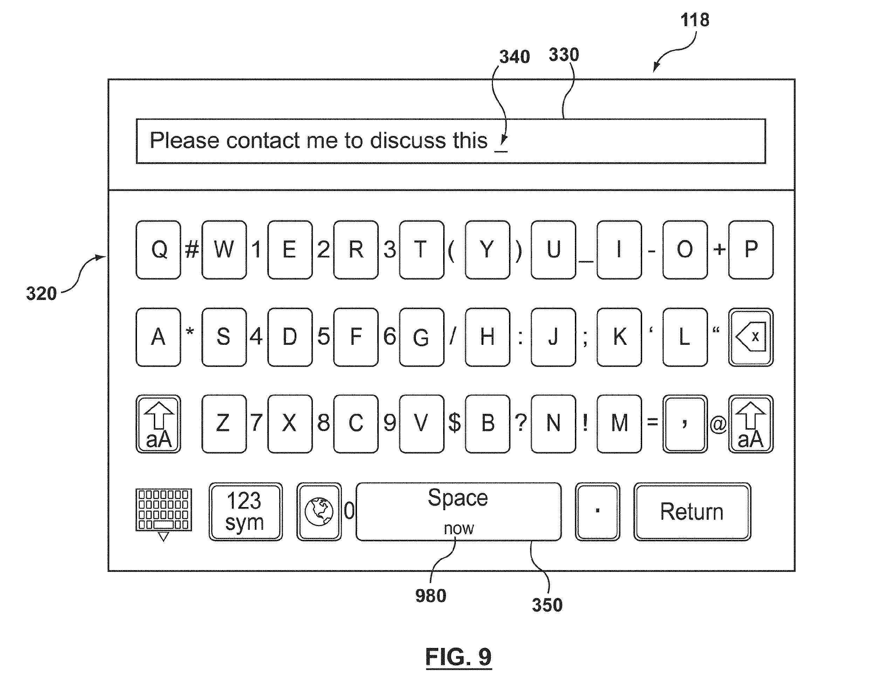

Fig. 9 shows an example where touchscreen 118 receives the "this" set of characters as input after user selects "this" as a desired predicted set of characters 880. In this example, touchscreen 118 displays predicted set of characters "now" 980 at space key 350.

Touchscreen 118 can also receive punctuation as input at any time during the typing of a message. If a user decides to use punctuation after inputting either a generated set of characters or a predicted set of characters, the <SPACE> character (for example, the <SPACE> character prior to cursor 940 of Fig. 9) is deleted and the inputted punctuation is inserted.

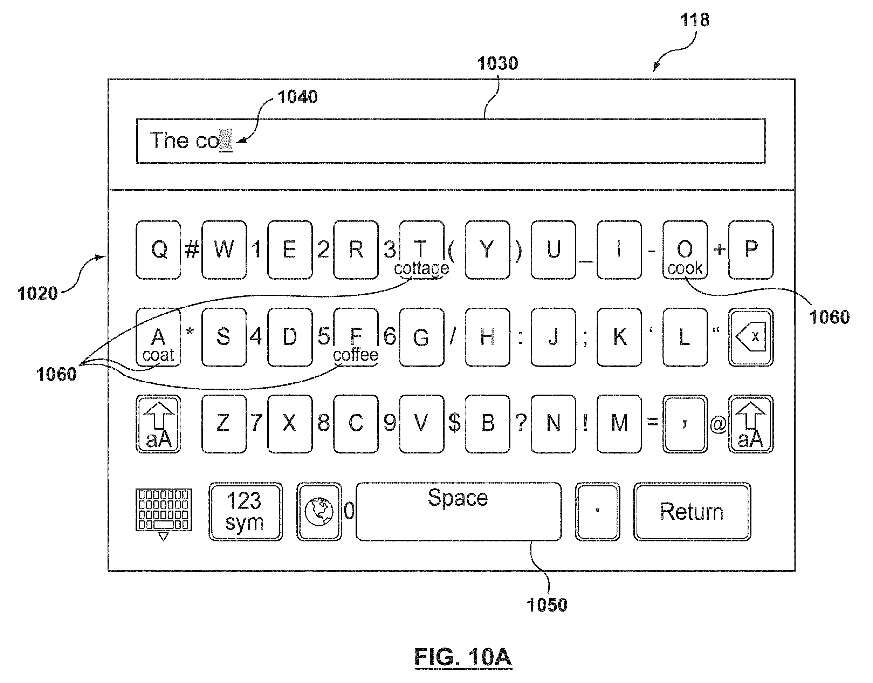

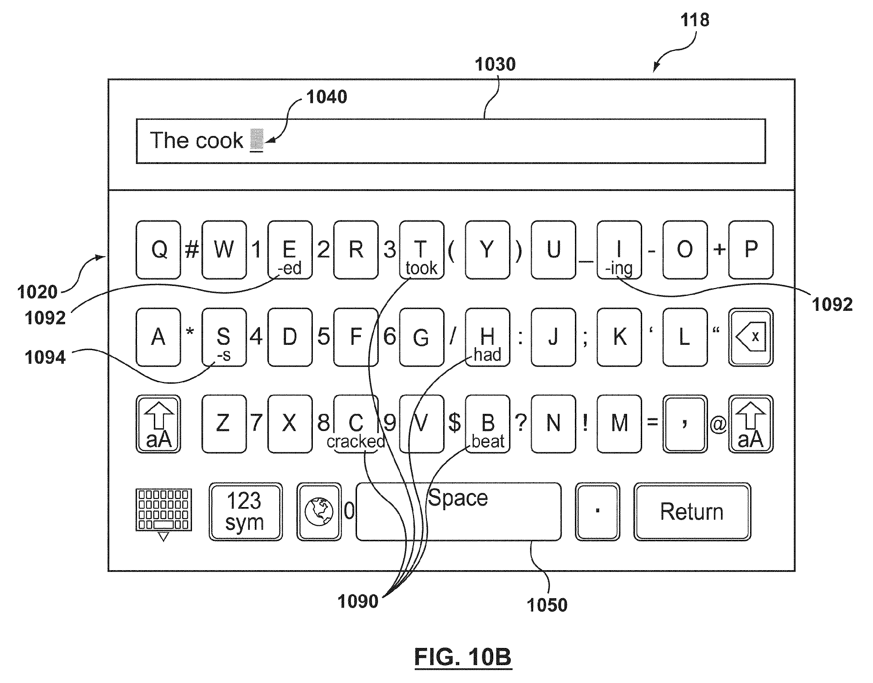

Figs. 10A and 10B show example front views of a touchscreen, consistent with embodiments disclosed herein. Fig. 10A shows an example where touchscreen 118 displays "The co" in a text bar 1030 and several generated set of characters 1060 are displayed at subsequent candidate input characters. In this example, touchscreen 118 displays generated set of characters "cottage" 1060 under the "T" key, generated set of characters "cook" 1060 under the "O" key, generated set of characters "coat" 1060 under the "A" key, and generated set of characters "coffee" 1060 under the "F" key.

Fig. 10B shows an example where touchscreen 118 receives the set of characters "cook" as input after the user has selected the generated set of characters 1060 "cook." The set of characters "cook" is inserted into input field 1030 along with a <SPACE> character. In this example, set of characters include new predicted set of characters (such as words 1090, affixes 1092 (for example, "- ed" under the "E" key and "-ing" under the "I" key), and plurals 1094 (for example, "-s" under the "S" key)), all of which are displayed at subsequent candidate input characters. Each predicted word 1090, affix 1092, or plural 1094 is located on respective subsequent candidate input characters that match the first letter of the predicted word 1090, affix 1092, or plural 1094. Now the user has the added option of inputting a predicted set of characters 1090, 1092, and 1094. Input is made in the same manner as described above. In some embodiments, when touchscreen 118 receives either affix 1092 or plural 1094 as an input, the <SPACE> character between cursor 1040 and "cook" is deleted and the corresponding inputted affix or plural is added to the end of "cook."

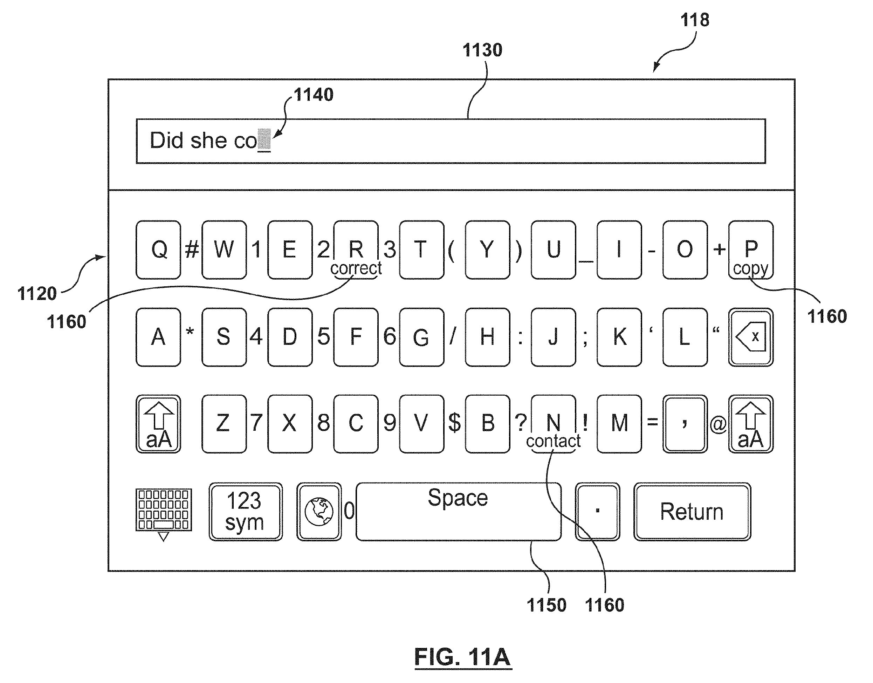

Fig. 11A shows an example where touchscreen 118 displays "Did she co" in a text bar 1130 and several generated set of characters 1160 are displayed at subsequent candidate input characters. In this example, touchscreen 118 displays generated set of characters "correct" 1160 under the "R" key, generated set of characters "copy" 1160 under the "P" key, and generated set of characters "contact" 1160 under the "N" key. While "co" is provided in the text bars of both Fig. 10A and Fig. 11A, touchscreen displays different generated set of characters based on the context of the characters in their respective text bars 1030 and 1130. For example, in Fig. 10A, the characters "co" follows "The," which implies that a noun beginning with "co" should follow. In Fig. 11A, the characters "co" follow a pronoun, which implies that a verb beginning with "co" should follow. As stated above, contextual data can be used to determine when certain set of characters are more appropriate based on, for example, the set of characters in a text bar or previous actions by a user.

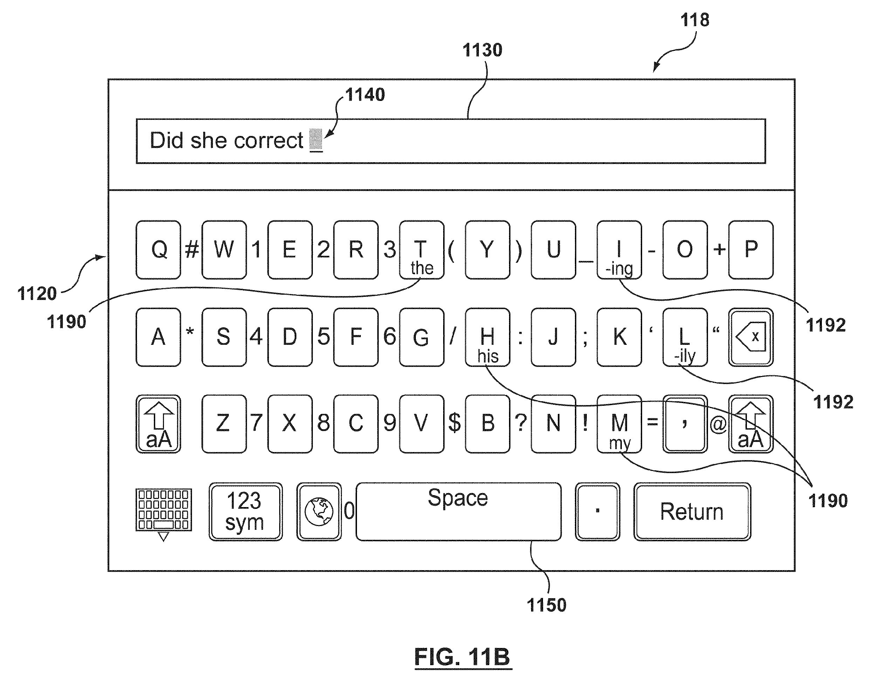

Fig. 11B shows an example where touchscreen 118 receives the set of characters "correct" as input after the user has selected the generated set of characters "correct" 1160. In this example, the set of characters "correct" is inserted in input field 1130 and a <SPACE> character is also inserted. Predicted set of characters (such as words 1190 and affixes 1192) are now displayed at subsequent candidate input characters. In this example, while affixes "-ing" and "- ily" both correspond to the "I" key, touchscreen 118 displays "-ing" with the "I" key and "-ily" with the "L" key. As stated above, the predicted affix may be assigned to a certain key based on a ranking, on contextual data, or a combination of both. In this embodiment, the "-ing" affix may have had a higher ranking than the "-ily" affix and was thus assigned to the "I" key. Accordingly, the "-ily" affix was assigned to the "L" key based on the corresponding "L" character being in the "-ily" affix.

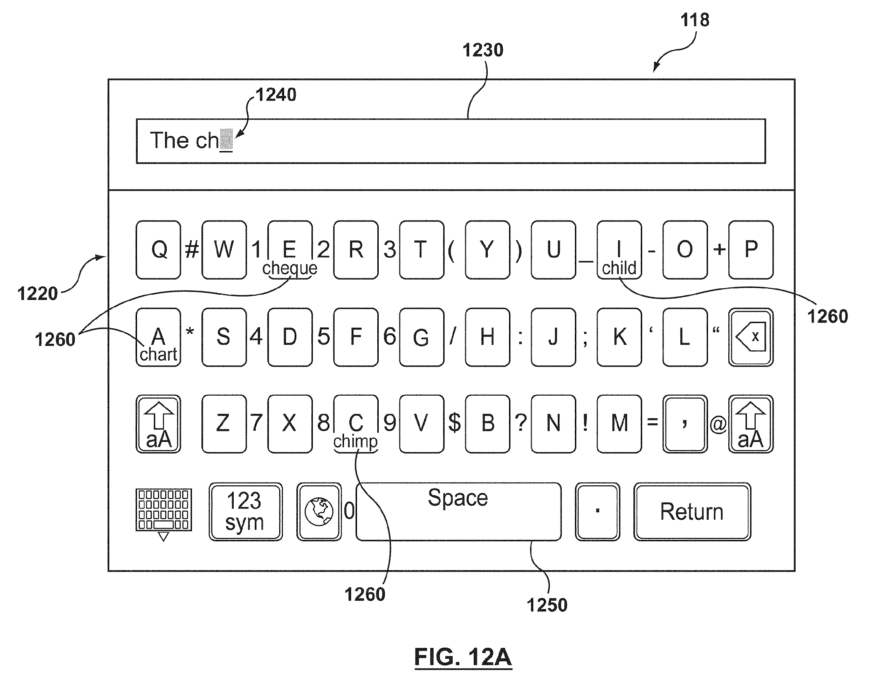

Fig. 12A shows an example where touchscreen 118 displays "The ch" in a text bar 1230 and several generated set of characters 1260 are displayed at subsequent candidate input characters. In this example, generated set of characters 1260 include both "child" and "chimp." In this embodiment, while the third letter in both "child" and "chimp" are the same, touchscreen displays "child" under the "I" key and displays "chimp" under the "C" key. The determination on which generated set of characters goes under which candidate input key can be based on a ranking (as specified above). As illustrated in this embodiment, touchscreen 118 can display a generated set of characters (in this case, "chimp") on a key even though that key may not be associated with any subsequent characters of the characters in text bar 1230.

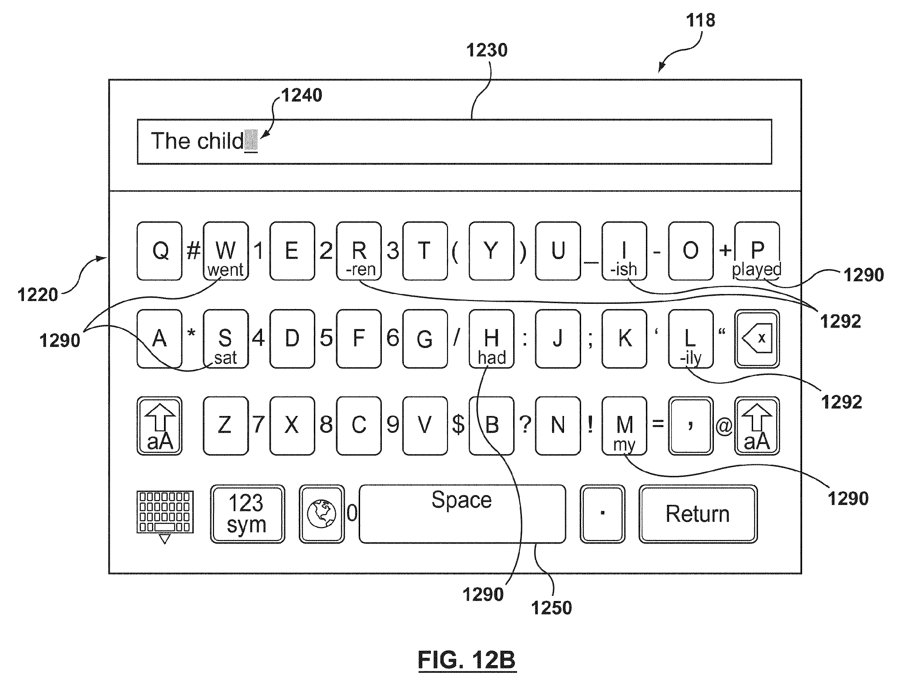

Fig. 12B shows an example where touchscreen 118 receives the set of characters "child" as input after the user has selected the generated set of characters "child" 1260. The set of characters "child" is inserted in input field 1230 and, in this example, a <SPACE> character is not inserted. Predicted set of characters (such as words 1290 and affixes 1292) are now displayed at subsequent candidate input characters. In this example, while affixes "-ish" and "- ily" both correspond to the "I" key, touchscreen 118 displays "-ish" with the "I" key and "- ily" with the "L" key. As stated above, the predicted affix may be assigned to a  certain key based on a ranking, on conventional data, or a combination of both. In this embodiment, the "-ish" affix may have had a higher ranking than the "-ily" affix and was thus assigned to the "I" key. Accordingly, the "-ily" affix was assigned to the "L" key based on the corresponding "L" character being in the "-ily" affix.

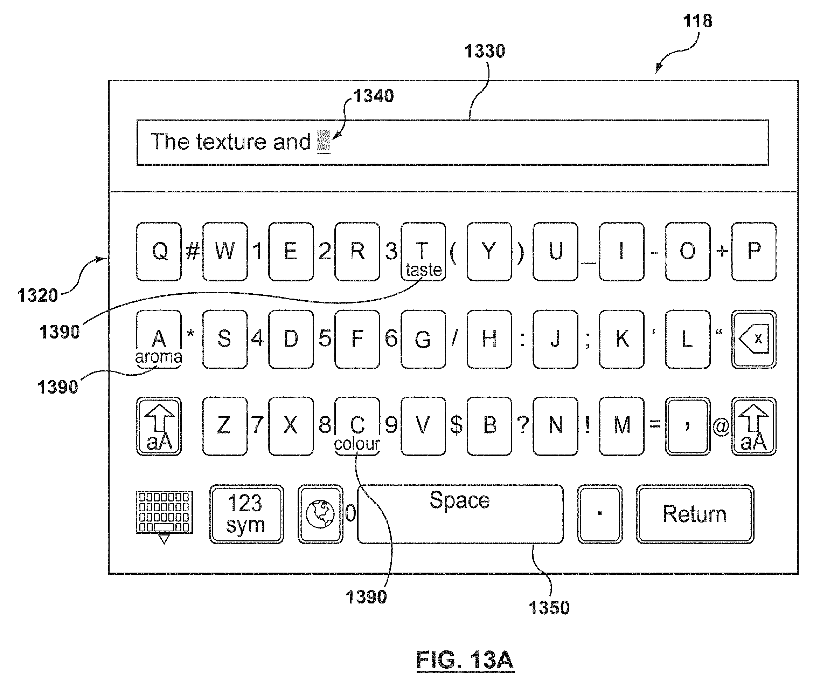

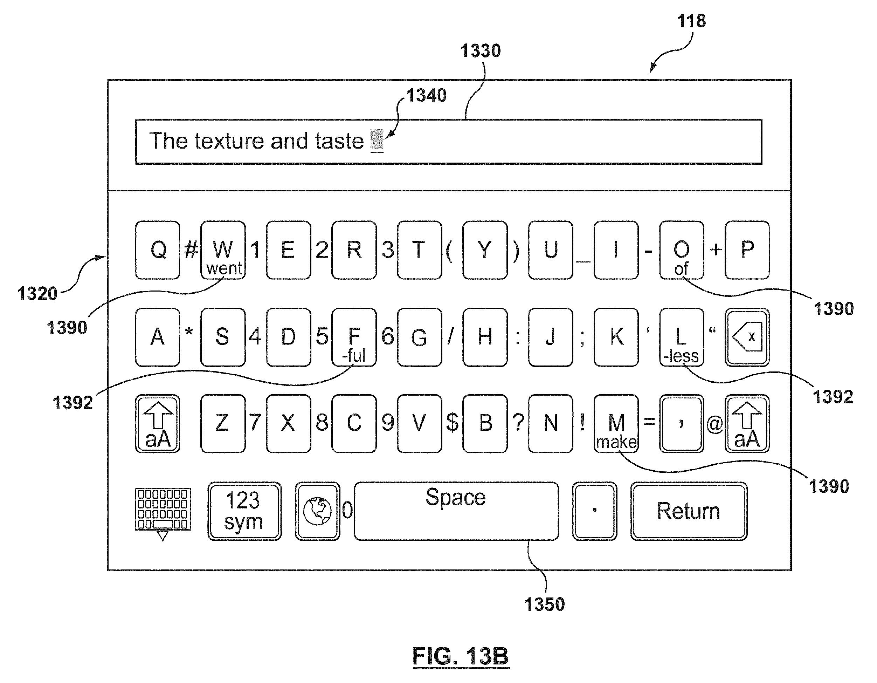

Fig. 13A shows an example where touchscreen 118 displays "The texture and" in a text bar 1330 and several predicted set of characters (for example, words 1390) are displayed at subsequent candidate input characters. Fig. 13B shows an example where touchscreen 118 received the set of characters "taste" as input after the user had selected the predicted set of characters "taste." In this example, a <SPACE> character was inserted after "taste." Consequently, predicted set of characters (such as, words 1390 and affixes 1392) are displayed at subsequent candidate input characters.

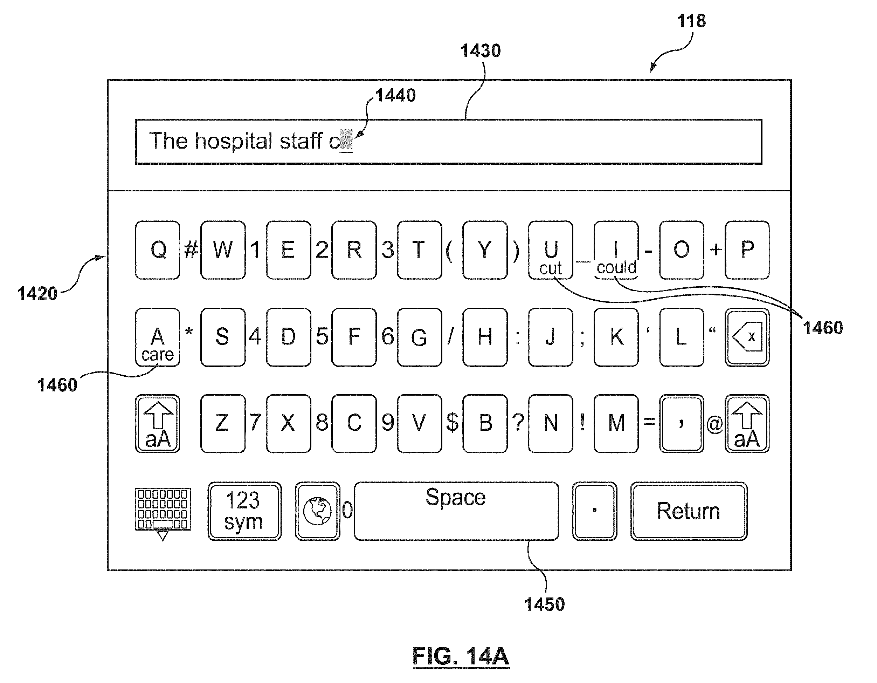

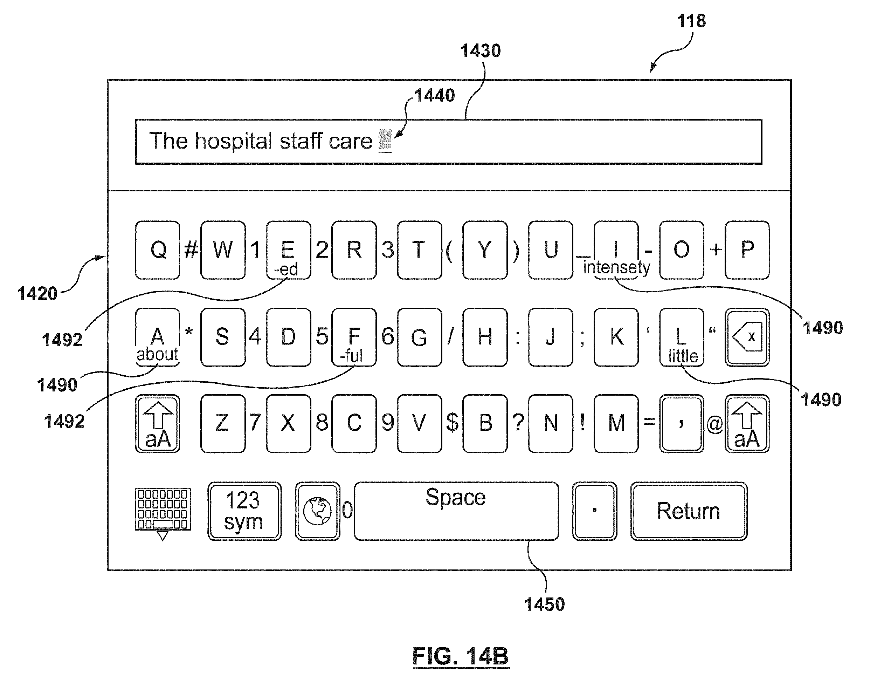

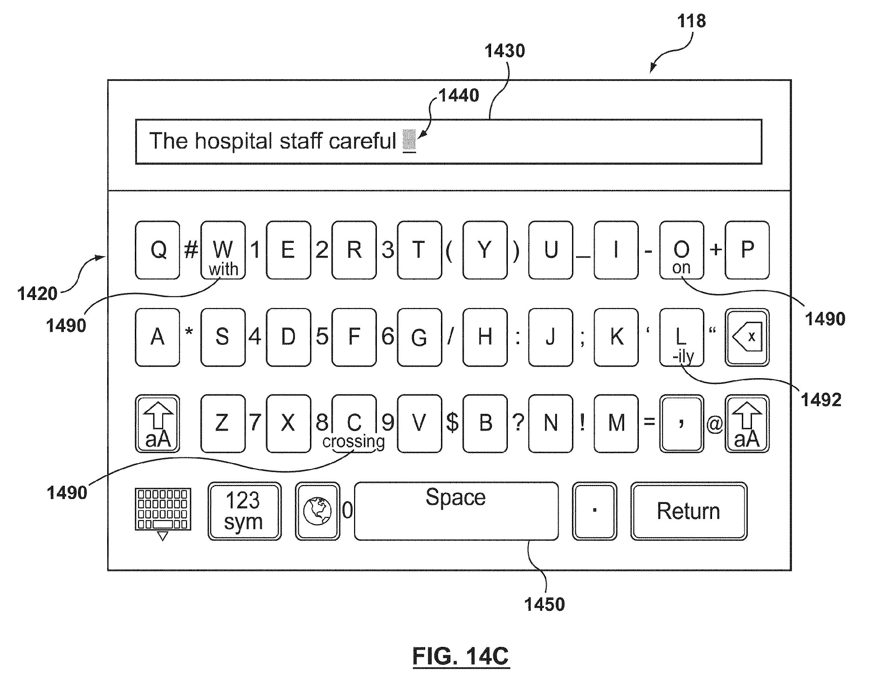

Fig. 14A shows an example where touchscreen 118 displays "The hospital staff c" in a text bar 1430 and several generated set of characters 1460 are displayed at subsequent candidate input characters. Fig. 14B shows an example where touchscreen 118 received the set of characters "care" as input after the user had chosen the generated set of characters "care." Generated set of characters "care" is now placed in input field 1430 along with a <SPACE> and predicted set of characters (such as, words 1490 and affixes 1492) are displayed at subsequent candidate input characters. Fig. 14C shows an example where touchscreen 118 received the affix "-ful" as input (thereby modifying the set of characters "care" to "careful") after the user had chosen the predicted affix "-ful." Thus, the set of characters "careful" is now inserted into input field 1430. Note, in some embodiments, inputting a word or affix can modify the input word or word fragment. For example, if "spicy" was input by a user, and "ness" is a predicted affix and is inputted, "spicy" would change to "spiciness," dropping the "y" and adding "iness". In other embodiments, "happy" could change to "happiness" or "conceive" could change to "conceivable".

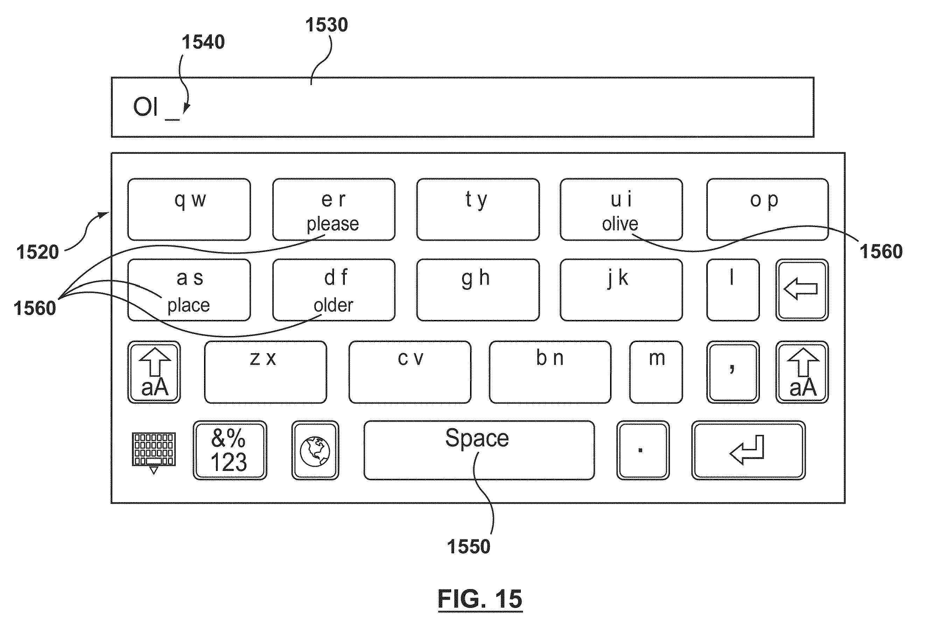

Fig. 15 shows an example of an ambiguous keyboard 1520, which can have multiple characters assigned to a key (for example, such as a telephone  keypad where "A", "B" and "C" are assigned to key 2; "D", "E" and "F" are assigned to key 3, and so on). For example, the characters "Q" and "W" can be assigned one key, and the characters "E" and "R" assigned to another key. In this example, the user has input the characters "OI" by pressing the "op" key followed by the "L" key. Using a predictor, generated set of characters 1560 are displayed at subsequent candidate input characters. Since the first pressed key can input either an "O" or a "P" and the second pressed key inputs an "L", generated set of characters 1560 will begin with "OL" or "PL", such as shown by generated set of characters 1560 in Fig. 15.

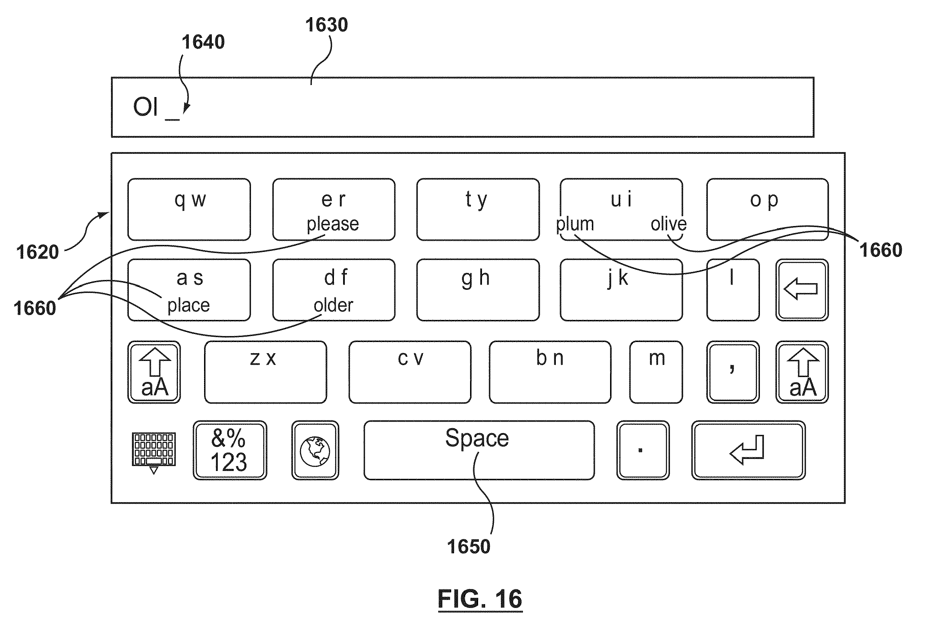

Fig. 16 shows another example of an ambiguous keyboard 1620. In this example, generated sets of characters "plum" and "olive" 1660 are displayed near the "ui" key. The sets of characters could also have been displayed at or on the "ui" key. Here, both sets of characters correspond to a particular input corresponding to a key, namely the third letter of plum is a "u" and the third letter of olive is an "i." Touchscreen 118 (via main processor 102) can differentiate between the input of either set of characters based on the user's action. For example, the user can swipe at or near the right of the "ui" key to input "olive", or swipe at or near the left of the "ui" key to input "plum".

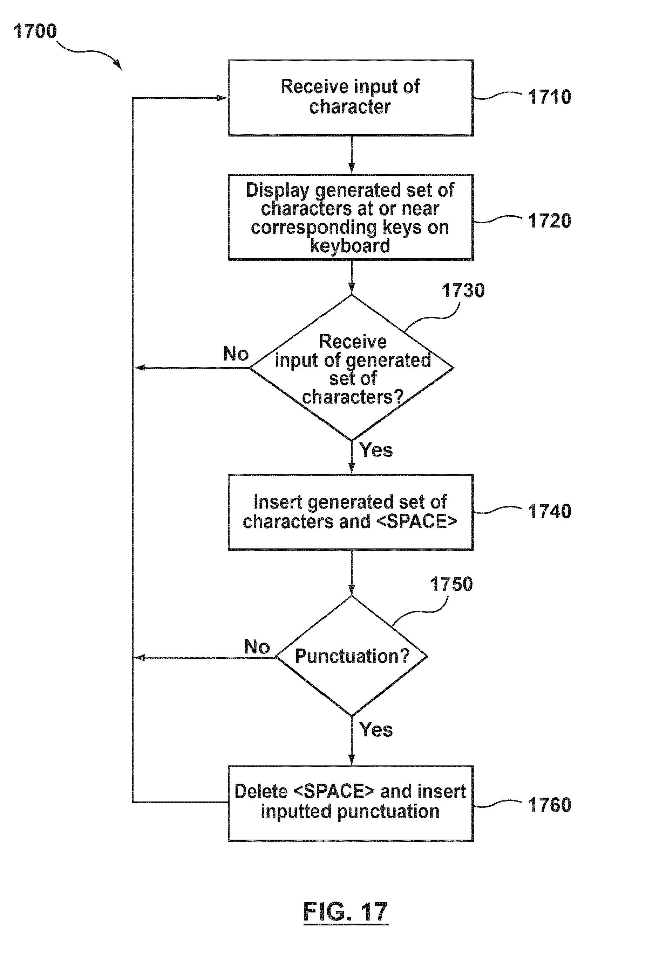

The examples and embodiments illustrated in Figs. 17, 18, and 19 can be implemented with any set of characters such as words, phrases, acronyms, names, slang, colloquialisms, abbreviations, or any combination thereof.

Fig. 17 shows in flowchart form a method 1700 in accordance with some embodiments. Method 1700 can be implemented with a processor, such as main processor 102, and stored on a tangible computer readable medium, such as hard drives, CDs, DVDs, flash memory, and the like. At block 1710, the processor receives an input of a character. At block 1720, the processor displays a generated set of characters at or near keys of subsequent candidate input characters on the touchscreen, such as described above.

At block 1730, the processor receives an input of the generated set of characters chosen by a user. If the user does not choose a generated set of characters displayed at or near keys of subsequent candidate input characters, the method restarts at block 1710, where the touchscreen can receive an input of another character. If a generated set of characters is received as input, at block 1740 the generated set of characters and a <SPACE> character is inserted in an input field (for example, input field 330 of Figs. 3-9). As mentioned previously, the user can choose the generated set of characters, for example, by swiping at or near it or by long pressing a key corresponding to the subsequent candidate input character.

Continuing at block 1750, if the processor detects that punctuation is not to be inserted, the method restarts at block 1710. If punctuation is to be inserted, the method continues to block 1760 where the <SPACE> character is deleted and the appropriate punctuation is added to the input field. After block 1760, the method starts over at block 1710.

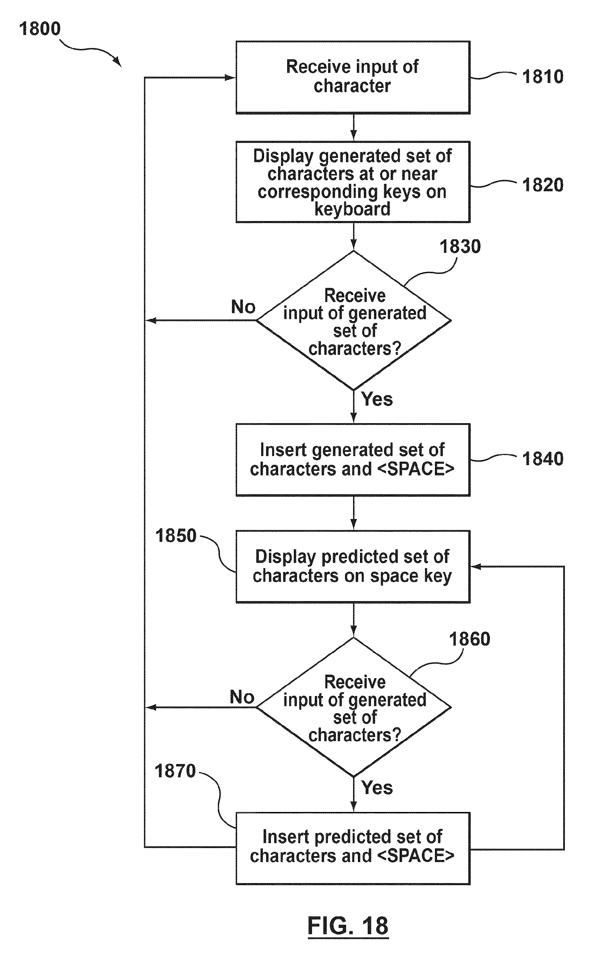

Fig. 18 is a flowchart illustrating example method 1800 in accordance with some embodiments. Method 1800 can be implemented with a processor, such as main processor 102, and stored on a tangible computer readable medium, such as hard drives, CDs, DVDs, flash memory, and the like. At block 1810, the processor receives an input of a character.

At block 1820, the processor displays a generated set of characters at or near a location on the keyboard corresponding to a subsequent candidate input character on a touchscreen. At block 1830, the processor receives an input of a generated set of characters chosen by a user. If the user does not choose a generated set of characters displayed at or near keys of subsequent candidate input characters, the method restarts at block 1810, where the processor can receive an input of another character. If a generated set of characters is received as input, at block 1840 the generated set of characters and a <SPACE> character is inserted in an input field (for example, input field 330 of Figs. 3-9). As mentioned previously, the user can choose the generated set of characters, for example, by swiping at or near it or by pressing a key corresponding to the subsequent candidate input character for a predetermined period of time.

At block 1850, a predicted set of characters, different from the generated set(s) of characters, is displayed on a space key of the keyboard after the input of the generated set of characters in block 1830. The predicted set of characters displayed in block 1850 is determined by using a predictor. In some embodiments, the one or more predicted sets of characters can be placed on one or more keys other than the space key.

At block 1860, the processor can determine whether it has received an input of the predicted set of characters based on a user input. If the touchscreen has not received an input of the predicted set of characters because the user has not chosen the predicted set of characters, the method restarts at block 1810. If the processor has received the input of the predicted set of characters, the method continues to block 1870, where the chosen predicted set of characters and a <SPACE> character is inserted in the input field. From here, method 1800 can return to either block 1810 or block 1850.

Even though method 1800 does not display the punctuation illustration as shown in method 1700, the punctuation illustration, as shown in blocks 1750 and 1760, can likewise be applied to method 1800.

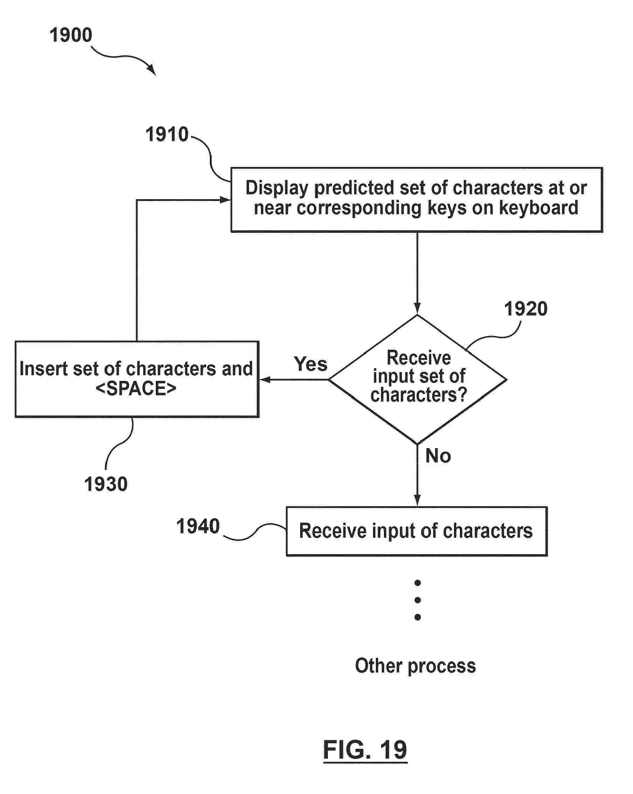

Fig. 19 is a flowchart illustrating an example method 1900 in accordance with some embodiments. At box 1910, predicted set of characters is displayed at corresponding subsequent candidate input characters. In these embodiments, an input has not been received or a delimiter has been activated, such as inputting a <SPACE>. Here, one or more predicted set of characters (such as, words, affixes, or a combination thereof) are placed on subsequent candidate input characters that correspond to the first letter of the generated set of characters. Moving to box 1920, it is determined whether the touchscreen receives an input of the set of characters (such as, word or affix) based on a user's selection. If an input is received, the method moves to block 1930 where the predicted set of characters and a <SPACE> character are inserted into an input field. Then the method starts over at block 1910. If the touchscreen does not receive an input of the set of characters, the touchscreen is available to receive an input of a character (as described by block 1710 of Fig. 17 or block 1810 of Fig. 18) and proceed through methods (such as methods 1700 of Fig. 17 or 1800 of Fig. 18 or even method 1900 of Fig. 19).

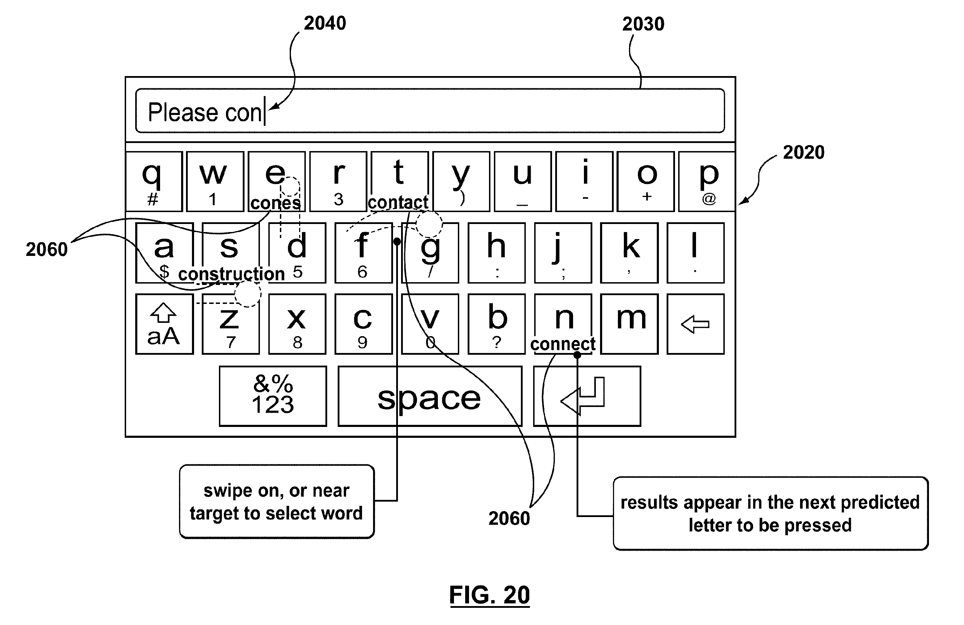

Fig. 20 shows another example of a virtual keyboard 2020 having an input field 2030. The set of characters "Please con" are received as input by the touchscreen and displayed in the input field 2030 followed by a cursor 2040, which can be a vertical line (as shown) or any other shape, such as an underscore as mentioned previously. A predictor determines one or more generated set of characters 2060 based in part on the received input for the current position of cursor 2040 within the current word, which is in the fourth character position of the current word, as shown in input field 2030. The current word is the word in which the cursor is currently located. In the shown example, generated set of characters 2060 "cones", "contact", "construction" and "connect" are displayed. Each generated set of characters 2060 is displayed at a key corresponding to a subsequent candidate input character (for example, under the E, T, S and N keys of the virtual keyboard 2020, respectively), for the current position of cursor 2040, which is in the third character position, as shown in input field 2030.

In the shown example, each generated set of characters 2060 is displayed at or near keys on the virtual keyboard 2020 associated with the subsequent candidate input characters. The display of a generated set of characters 2060 at or near a key corresponding to a subsequent candidate input character depends, for instance, on the size of the generated set of characters 2060 and the size of generated set of characters associated with nearby keys of other subsequent candidate input characters. When the generated set of characters associated with nearby keys in the same row of keys in the virtual keyboard 2020 are too large to be displayed at the same time without overlapping with each other or without a predetermined distance between the generated sets of characters, the processor 102 limits the generated set of characters which are displayed. The processor 102 may limit the generated set of characters which are displayed using one or any combination of the rank of each generated set of characters, the size of each generated set of characters, and a distance between each generated set of characters which are displayed so that a predetermined distance between the generated set of characters is maintained. This may result in the display of one or more generated sets of characters which are larger than the associated key in the virtual keyboard 2020.

In some examples, if two generated sets of characters are both ranked high, and these sets of characters would otherwise be displayed at nearby keys but cannot be displayed and still maintain a predetermined distance between the generated sets of characters at the display text size, the electronic device could be configured to display only the highest ranked generated set of characters. This results in the display of the most likely generated set of characters. In other examples, only the longest of the generated set of characters is displayed. This may be beneficial in that allowing faster entry of longer words saves time and processing cycles, thereby leveraging the predictive text input solution. In yet other examples, only the shortest generated set of characters is displayed. This may be beneficial in that shorter words can be more common, at least for some users, thereby allowing faster entry of words which saves time and processing cycles, thereby leveraging the predictive text input solution.

In some examples, the processor 102 may only limit the generated set of characters which are displayed in neighboring/adjacent keys in the same row of keys in the virtual keyboard 2020. In some examples, the processor 102 may limit the generated set of characters which are displayed in neighboring/adjacent keys in the same row of keys in the virtual keyboard 2020 so that a generated set of characters is never displayed in neighboring/adjacent keys irrespective of the size of the generated set of characters or distance between each generated set of characters. In such examples, the processor 102 uses the rank to determine which generated set of characters are displayed.

In other examples, the processor 102 can limit the generated set of characters which are displayed when the generated set of characters associated with nearby keys in different rows of keys in the virtual keyboard 2020 are too large to be displayed at the same time without overlapping with each other or without a predetermined distance between the generated sets of characters. In other examples, the processor 102 can limit the generated set of characters which are displayed when the generated set of characters associated with nearby keys in the same or different columns of keys in the virtual keyboard 2020 are too large to be displayed at the same time without overlapping with each other or without a predetermined distance between the generated sets of characters

As mentioned previously, a user can use a finger or stylus to swipe a generated set of characters to input that generated set of characters. An individual letter, in contrast, can be input by tapping a respective key in the virtual keyboard 2020 using a finger or stylus. The touchscreen differentiates between tap and swipe events using movement and duration of touch events, the details of which are known in the art and need not be described herein. Each key in the virtual keyboard 2020 and each generated set of characters 2060 which is displayed has an associated target area on the touchscreen. The target area associated with each generated set of characters can be larger than and/or overlap with the target area of the key corresponding to the subsequent candidate input character with which it is associated and possibly nearby keys, such as neighboring keys in the same row. A user need only swipe on or nearby a displayed generated set of characters to input the generated set of characters. This permits faster input of a generated set of characters by creating larger and more accessible target areas, thereby saving time and processing cycles. In some examples, a generated set of characters can be input by detecting a swipe in any direction at or near the displayed generated set of characters. In other examples, a generated set of characters can only be input by detecting a swipe in a particular direction at or near the displayed generated set of characters. The particular direction may be associated with a direction in which the particular direction displayed generated set of characters (e.g., left or right in the shown example). In some examples, the swipe is at or near the displayed generated set of characters when the swipe has an initial contact point within the target area associated with the displayed generated set of characters (which may be the same or larger than the displayed generated set of characters).

**Configurable virtual keyboard**

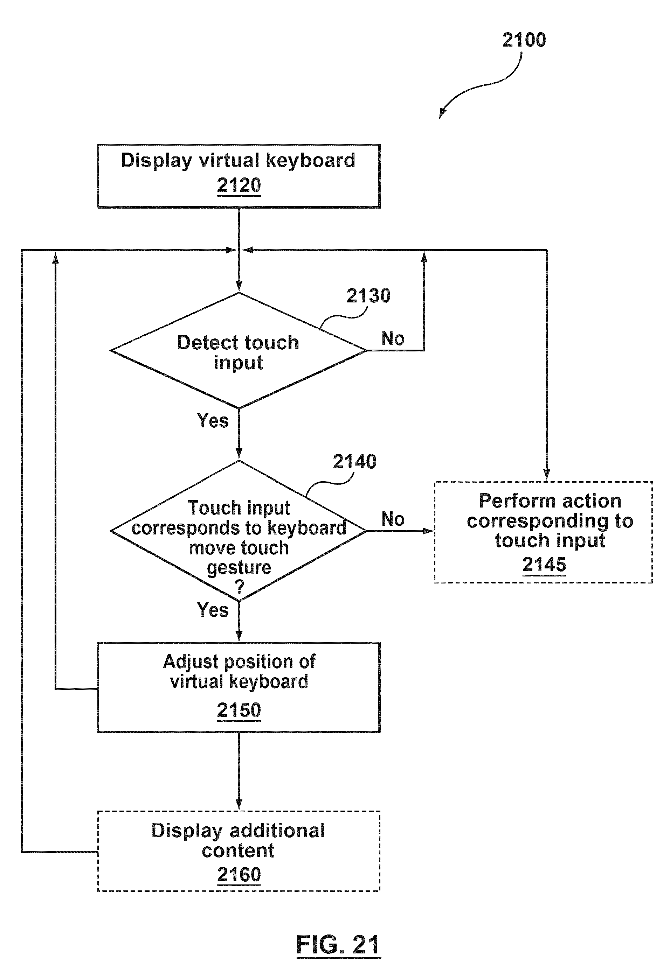

Fig. 21 is a flowchart of a method 2100 for configuring a virtual keyboard rendered and displayed on a display of an electronic device 100 in accordance with one example embodiment of the present disclosure. The method 2100 may be carried out, at least in part, by firmware or software executed by the processor 102. Coding of software for carrying out such a method 2100 is within the scope of a person of ordinary skill in the art provided in the present disclosure. The method 2100 may contain additional or fewer processes than shown and/or described, and may be performed in a different order. Computer-readable code executable by the processor 102 to perform the method 2100 may be stored in a computer-readable medium such as the memory 110.

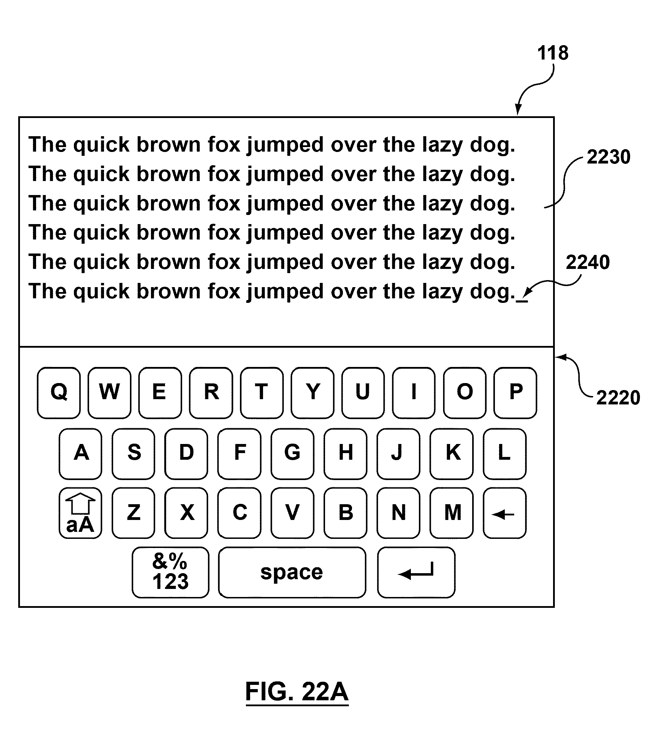

At 2120, a virtual keyboard is rendered and displayed on the touchscreen 118. The virtual keyboard may be displayed automatically when an input field of a text entry mode is displayed, or may be called or invoked, for example, in response to corresponding input (such as activation of a keyboard button or icon). The virtual keyboard includes a plurality of keys including a plurality of character keys as previously described. Each key in the plurality of character keys corresponds to a character in an input character set. The input character set, in at least some examples, is an English alphabetic or alphanumeric character set. The plurality of character keys are arranged in a familiar QWERTY layout as shown in the example of Fig. 22A, but may be arranged in another suitable format in other examples.

Figs. 22A-22D illustrate a user interface screen displayed on the touchscreen 118 having a virtual keyboard 2220 displayed below an input field 2230. Text "The quick brown fox jumped over the lazy dog...." has been received as input by the touchscreen 118 and displayed in the input field 2230 followed by a cursor 2240, which can be an underscore (as shown) or any other shape, such as a vertical line (or piping symbol) as mentioned previously. In the example of Fig. 22A, the virtual keyboard 2220 is displayed in a default position (or standard position) at the bottom of the user interface screen displayed on the touchscreen 118. A different default position may be used in other examples.

At block 2130, the electronic device 100 and/or touchscreen 118 which monitor for touch events, detect a touch input on the touchscreen 118 at a location within a display area of the virtual keyboard 2220.

At block 2140, the electronic device 100 determines a type of touch gesture of the detected touch input. As a part of the determining, the electronic device 100 determines whether the touch input corresponds to a designated keyboard move touch gesture.

The keyboard move touch gesture, in some examples, is uniquely associated with moving the virtual keyboard 2220, at least in contexts in which the virtual keyboard 2220 is displayed. In such examples, the keyboard move touch gesture may be used to adjust the position of the virtual keyboard 2220 even though the particular touch gesture assigned as the keyboard move touch gesture may be associated with other commands or actions in other contexts. This also allows the keyboard move touch gesture to be performed anywhere within the virtual keyboard 2220 without interference with other touch inputs recognized by the virtual keyboard 2220. In some examples, the keyboard move touch gesture has an initial (starting) contact point within the virtual keyboard 2220 but may have a terminal (ending) contact point outside of the virtual keyboard 2220 (e.g., within the input field 2230). In other examples, the keyboard move touch gesture has both an initial contact point and a terminal contact point within the virtual keyboard 2220.

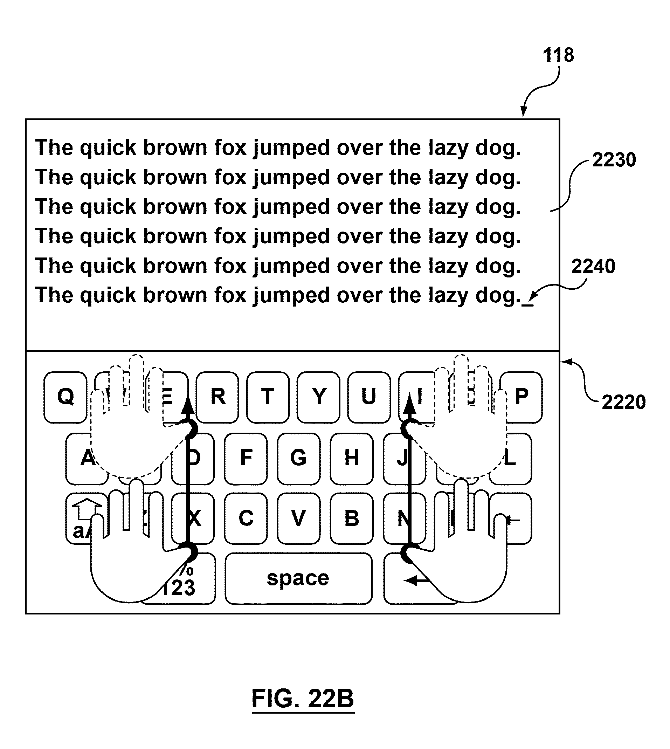

In some examples, the keyboard move touch gesture is a two-finger drag gesture. Fig. 22B shows an example of the user interface screen at the starting position of a two-finger drag gesture. A two-finger drag gesture is a multi-touch gesture in which two-fingers touch the touchscreen 118 and move in the same direction while maintaining contact with the touchscreen 118 (i.e., without the fingers losing contact with the touchscreen 118). As appreciated by persons skilled in the art, a touch input caused by each of the two-fingers typically has a minimum travel distance which is exceeded before the touch input is recognized as a two-finger drag gesture. This prevents very small gestures from being recognized as touch inputs. The minimum travel distance is typically set at an optimal value which reduces or eliminates false touch inputs while recognizing most or all intended touch inputs. The two-finger drag gesture is a relatively easy gesture for users to perform, is fairly distinct and so is relatively easy for the electronic device 100 to differentiate from other gestures.

In other examples, the keyboard move touch gesture is a press-and-drag gesture. A press-and-drag gesture is a multi-touch gesture in which a first finger touches or presses against the touchscreen 118 while a second finger moves in a direction across with the touchscreen 118 while maintaining contact with the touchscreen 118 (i.e., without the second finger losing contact with the touchscreen 118).

In yet other examples, the keyboard move touch gesture can be either a two-finger drag gesture or a press-and-drag gesture.

At optional block 2145, the electronic device 100 may perform an action if the touch input does not correspond to a keyboard move touch gesture but does correspond to other designated input. The action may be input of a character when the location of the touch input is associated with a character key in the virtual keyboard 2220. Alternatively, the action may be execution of a command when the location of the touch input is associated with a non-character key in the virtual keyboard 2220 or other action.

At block 2150, a position of the virtual keyboard 2220 is adjusted when the touch gesture corresponds to the keyboard move touch gesture. As part of the adjusting, the virtual keyboard 2220 is redisplayed in a new position in accordance with a direction of the keyboard move touch gesture. The virtual keyboard 2220, in some examples, is moved by an amount proportional to a travel distance of the touch input during the keyboard move touch gesture. In at least some examples, the virtual keyboard 2220 is moved by an amount equal to the travel distance of the touch input during the keyboard move touch gesture.

In some examples, the input field 2230 may have a minimum size which sets an upper limit or boundary for the virtual keyboard 2220. The rendering and redisplaying of the user interface screen caused by adjusting the position of the virtual keyboard 2220 is typically performed in real-time in accordance with travel (i.e., movement) of the touch input during the performance of the keyboard move touch gesture to provide a scrolling or sliding visual effect; however, in some examples the rendering and redisplaying of the user interface screen could occur after completion of the keyboard move touch gesture when contact with the touchscreen 118 ends.

The travel distance of the touch input during the keyboard move touch gesture may be measured in terms of movement of a centroid of the touch input. When the keyboard move touch gesture is a multi-touch gesture, such as a two-finger drag gesture, the travel distance may be measured in terms of the movement of an average location of the centroids of all touch events caused by the user's fingers (e.g., the centroid between all touch events), the movement of a topmost touch event (e.g., topmost finger), the movement of a bottommost touch event (e.g., bottommost finger), the movement of a first touch event in the multiple touches (e.g., the first finger to contact the touchscreen 118), the movement of a last touch event in the multiple touches (e.g., the last finger to contact the touchscreen 118), an average movement of all touch events caused by the user's fingers, or other suitable basis. When the keyboard move touch gesture is a two-finger drag gesture, in at least some examples, the touch events associated with each finger are checked for movement even if only one touch event is used to calculate the travel distance. A travel distance is determined only when both touch events are moving.

In other examples, the virtual keyboard 2220 is moved in increments rather than being proportional to a travel distance of the touch input during the keyboard move touch gesture. In some examples, the increments may be equivalent to a height of a row of keys in the virtual keyboard 2220. In such examples, to move the virtual keyboard 2220, the keyboard move touch gesture has a travel distance which is at least equal to the increment size (e.g., row height). The number of increments which the virtual keyboard 2220 is moved is determined by rounding a quotient (result of division) of the travel distance/increment size to the nearest integer. The number of increments may be limited by a maximum to maintain a minimized size of the input field 2230.

It is known that users often hold the electronic device 100 in both hands using only their thumbs to activate the keys on the virtual keyboard 2220. Two-thumb typing is common in landscape screen orientations but may also be used in portrait screen orientations. The virtual keyboard 2220 is typically displayed at the bottom of user interface screens as shown in Fig. 22A; however, it has been discovered that this position is uncomfortable for some device users and may result in an increase number of erroneous (false) inputs due to user discomfort caused, for example, by cramping of the hand or fingers. False inputs unnecessarily waste device resources, delay the processing of received text, and cause user frustration among many drawbacks. The method 2100 provides for better ergonomics by allowing users to dynamically adjust the position of the virtual keyboard 2220 to personal preferences, thereby relieving or reducing user discomfort as well as reducing the likelihood of false inputs. Moreover, the use of a two-finger drag gesture allows users to perform the keyboard move touch gesture with their thumbs while holding the device in two-hands and starting with their thumbs in the prone position. This presents opportunities for discoverability of the keyboard move touch gesture given the relative ease of performing the gesture and the proximity of the starting point of the gesture to the prone position of the user's thumbs. Even when holding the electronic device 100 with one hand, the thumb from the other hand can be moved into contact with the touchscreen 118 to perform a two-finger drag gesture with minimal effort and little user discomfort. The two-finger drag gesture also emulates a slide gesture for sliding out a physical keyboard which is familiar to many users having prior experience with so-called slider-style electronic devices (i.e., electronic devices having a slide-out keyboard).

In some examples, the keyboard move touch gesture may be a two-finger drag gesture performed with the user's thumbs to further distinguish the keyboard move touch gesture from other touch gestures recognized by the electronic device 100. Touch input with the thumbs may be identified in accordance with a determined shape of a contact area of the touch input. As appreciated by persons skilled in the art, each touch input is caused by a touch event detected by the touchscreen 118. The touch event is defined by a contact area caused by interaction of a user's finger with the touchscreen 118. The touchscreen 118, or the main processor 102, may determine a shape or profile of the contact area of the user's finger.

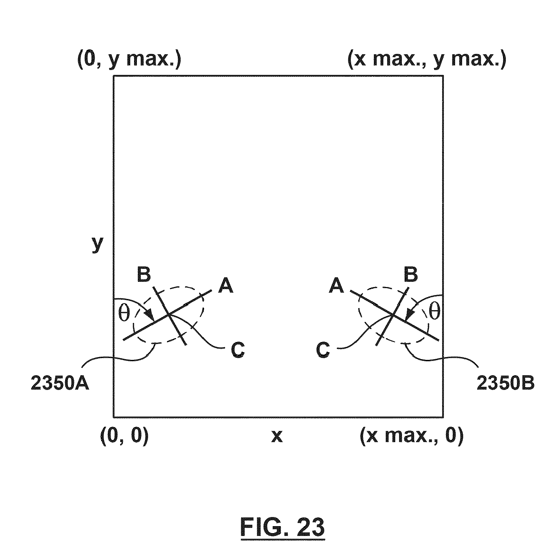

Referring now to Fig. 23, a Cartesian (two dimensional) coordinate system suitable for mapping locations of the touchscreen 118 and determining a shape of the contact area of the user's finger will be described. The touchscreen 118 defines a Cartesian coordinate system defined by x and y-axes in an input plane of the touchscreen 118. The x and y-axes of the Cartesian coordinate system are used to map locations of the touchscreen 118 and are aligned with the x and y-axes of the positional sensor; however in other embodiments these may be different. Each touch event on the touchscreen 118 returns a touch point defined in terms of an (x, y) value. The returned touch point is typically the centroid of the contact area. In the shown embodiment, the coordinate system has an origin (0, 0) which is located at a bottom-left corner of the touchscreen 118; however, it will be appreciated that the origin (0, 0) could be located elsewhere such as a top-left corner of the touchscreen 118. A user's left thumb and right thumb are represented by the references 2350A and 2350B, respectively.

The contact area caused by a user's finger roughly represents an ellipse. In at least some examples, the touchscreen 118, or the main processor 102, may determine a shape of the contact area of the user's finger by performing a mathematical analysis on the contact area. As part of the calculations performed in the mathematical analysis, a center point (or centroid) of the contact area and two lines which symmetrically bisect the ellipse through the center point are determined. The longer of the bisectors represents a major axis (A) of the ellipse and the shorter of the bisectors represents a minor axis (B) of the ellipse. The angle ($\theta$) of the major axis (A) relative to an edge of the display 112 or a screen orientation may be used to determine the direction of the touch input. The screen orientation of the content displayed on the display 112, which is a parameter of the GUI and known to the device, or a device orientation of the display 112 which is detected by the orientation sensor 197, may be used to determine the direction along the major axis (A). More details of an example method of calculating a shape of the contact area of the user's finger is found in U.S. Patent Publication No. 2007/0097096, which is incorporated herein by reference.

The centroid of the contact area is calculated based on raw location and magnitude data (e.g., capacitance data) obtained from the contact area. The centroid is typically defined in Cartesian coordinates by a value ($X_c$, $Y_c$). The centroid of the contact area is the weighted averaged of the pixels in the contact area and represents the central coordinate of the contact area. By way of example, the centroid may be found using the following equations:

$$X_c = \frac{\sum_{i=1}^{n} Z_i * x_i}{\sum_{i=1}^{n} Z_i} \qquad (1)$$

$$Y_c = \frac{\sum_{i=1}^{n} Z_i * y_i}{\sum_{i=1}^{n} Z_i} \qquad (2)$$

where $X_c$ represents the x-coordinate of the centroid of the contact area, $Y_c$ represents the y-coordinate of the centroid of the contact area, x represents the x-coordinate of each pixel in the contact area, y represents the y-coordinate of each pixel in the contact area, Z represents the magnitude (e.g., capacitance value) at each pixel in the contact area, the index i represents the pixel (or electrode) in the contact area and n represents the number of pixels (or electrodes) in the contact area. Other methods of calculating the centroid will be understood to persons skilled in the art.

In other examples, the touchscreen 118, or the main processor 102, may determine the shape of the contact area of the user's finger by performing a comparative analysis on the contact area. As part of the comparative analysis, the detected contact area is compared to one or more touch profiles stored, for example, in the memory 110 on the device. In some examples, the touch profiles may include common shapes of touch inputs by a left thumb press or right thumb press. In some examples, profiles may also include common shapes for left or right finger touches. In some examples, these profiles may include common shapes of touches when held by a left hand or when held by a right hand.

The electronic device 100 may determine whether the shape of the touch input corresponds to one of the touch profiles stored in memory. For example, if the electronic device 100 determines that a shape of a touch input in a left portion of the touchscreen 118 corresponds to a touch profile for a left thumb, and a shape of a touch input in a right portion of the touchscreen 118 corresponds to a touch profile for a right thumb, the electronic device 100 may determine that the touch gesture was performed using the user's thumbs. The shape of the touch inputs do not necessarily have to identically match a touch profile. In some examples, the electronic device 100 may determine the corresponding touch profile by selecting the touch profile which most closely resembles the shape of the touch input within certain thresholds.

At block 2160, the electronic device 100 displays additional content in response to adjusting the position of the virtual keyboard 2220. The display of additional content is optional. The additional content is only displayed when available, for example, when the virtual keyboard supports additional content. For example, when the virtual keyboard 2220 is moved from the bottom of the user interface screen, the additional content may be displayed in a display area below the virtual keyboard 2220. The additional content may be, for example, one or more hidden rows of keys of the virtual keyboard 2220 which have been hidden by default, an input character selection menu bar having one or more buttons, icons or keys for selecting an alternative input character set of the virtual keyboard 2220, a menu bar including buttons or icons for calling or invoking non-keyboard related functions, actions or commands which are less commonly used in connection with the virtual keyboard 2220 and/or menus for changing device settings, a search bar including a search input field for performing a search on received input, or other additional content. The search input field may receive input for performing a local search of local resources on the electronic device 100 (e.g., the memory 110 and/or any removeable memory card), a remote search of a remote resource such as an Internet search (e.g., Google™ search or Bing™ search) or an enterprise database, or a universal search of local and remote resources.

In the shown example, the virtual keyboard 2220 displays a primary input character set. As noted above, the additional content may be an input character selection menu bar having one or more buttons, icons or keys for changing the character set of the virtual keyboard 2220 from the primary input character set to an alternative input character set selected from one or more alternative input character sets. The primary input character set in the shown example includes alphabetic characters and punctuation. The alternative input character set may be, for example, a number and symbol input character set including numeric characters, symbols and punctuation, a supplemental symbol character set including symbols in addition to those in the number and symbol input character set, or an emoticon input character set including a number of emoticons. The alternative input character set may include characters from different languages including but not limited to accents, alphabetic characters with accents, or other symbols and characters associated with a particular language.

In some examples, the virtual keyboard 2220 includes character keys in accordance with a first input character set in a first language (e.g., English), and the additional content is an input character selection menu bar having one or more buttons, icons or keys for changing the character set of the virtual keyboard 2220 to a second input character set in a second language (e.g., French), and optionally other languages (e.g. German, Chinese, etc.). It will be appreciated that changing the input character set of the virtual keyboard 2220 to an alternative input character set causes the character keys of the virtual keyboard 2220 to change to match the alternative input character set.

The method 2100 returns to block 2130 after adjusting the position of the virtual keyboard 2220 (block 2150) or optionally displaying additional content in response to adjusting the position of the virtual keyboard 2220. At block 2130, the electronic device 100 and/or touchscreen 118 again monitor for touch events on the touchscreen 118. The virtual keyboard 2220 may be moved to a further adjusted position, either upwards or downwards, in accordance with a direction of further keyboard move touch gestures and the position of the virtual keyboard 2220.

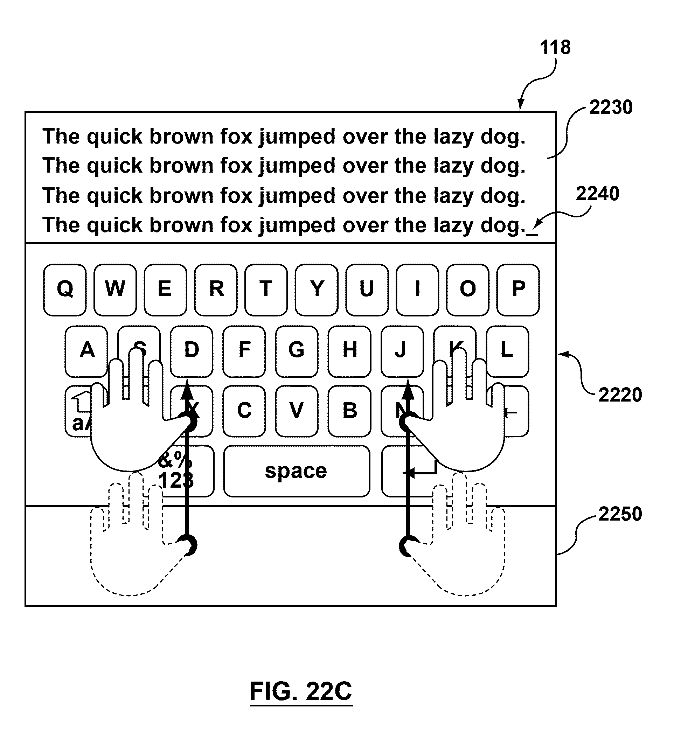

Referring now to Fig. 22B-22D, the adjustment of the virtual keyboard 2220 will be described in more detail. In Fig. 22B, the virtual keyboard 2220 is located at the bottom of the user interface screen displayed on the touchscreen 118 and the user's thumbs are in contact with the touchscreen 118 at a starting position of an upward keyboard move touch gesture. In Fig. 22C, the keyboard move touch gesture has been completed and the virtual keyboard 2220 has been moved upwards from the starting position at the bottom of the user interface screen. In the shown example of Fig. 22C, a display area is provided below the virtual keyboard 2220 in the adjusted position. In the shown example, the display area is a continuation input field 2250 which provides a continuation of the input field 2230 such that text continues seamlessly between the input field 2230 and the continuation input field 2250. In the shown example, the text in the input field 2230 is scrolled, if necessary, so that the cursor 2240 is maintained in the input field 2230 located above the virtual keyboard 2220. This location is more ergonomic and convenient for device users, thereby facilitating further text input using the virtual keyboard 2220 in the adjusted position.

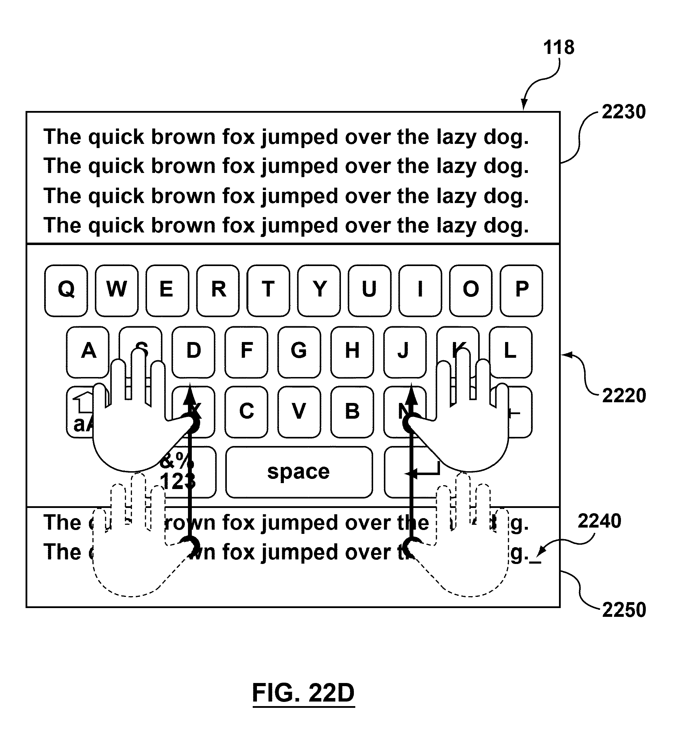

Fig. 22D shows an alternative to Fig. 22C in which the text in the input field 2230 is static and is not scrolled, if necessary, to maintain the cursor 2240 in the input field 2230 located above the virtual keyboard 2220. In the shown example of Fig. 22D, this results in the cursor 2240 being located in the continuation input field 2250 below the virtual keyboard 2220. The location of the cursor 2240 may be changed by corresponding input in the input field 2230 or continuation input field 2250, for example, tapping a location in the input field 2230 causes the cursor 2240 to move to the corresponding location in the input field 2230, and tapping a location in the continuation input field 2250 causes the cursor 2240 to move to the corresponding location in the continuation input field 2250. The text in the input field 2230 and continuation input field 2250 may be scrolled in response to corresponding directional navigational input. For example, the received text in the input field 2230 and continuation input field 2250 may be scrolled forwards in response to forward scrolling input or scrolled backwards in response to backward scrolling input. In some examples, the forward scrolling input is a down swipe and the backward scrolling input is an up swipe.

In yet other examples (not shown), the virtual keyboard 2220 may overlay the input field 2230 rather than being presented in-line with the input field 2230 and continuation input field 2250.

The virtual keyboard 2220 may be moved from the adjusted position to a further adjusted position or the default position in response to a further downward keyboard move touch gesture. For example, the virtual keyboard 2220 may be moved further upwards in response to a further upward keyboard move touch gesture (e.g., an upward two-finger drag gesture), or may be moved downwards in response to a downward keyboard move touch gesture (e.g., a downward two-finger drag gesture). Starting from the adjusting position in Fig. 22C or Fig. 22D, the virtual keyboard 2220 may be moved from the adjusted position to the default position shown in Fig. 22A and Fig. 22B in response to a downward keyboard move touch gesture.

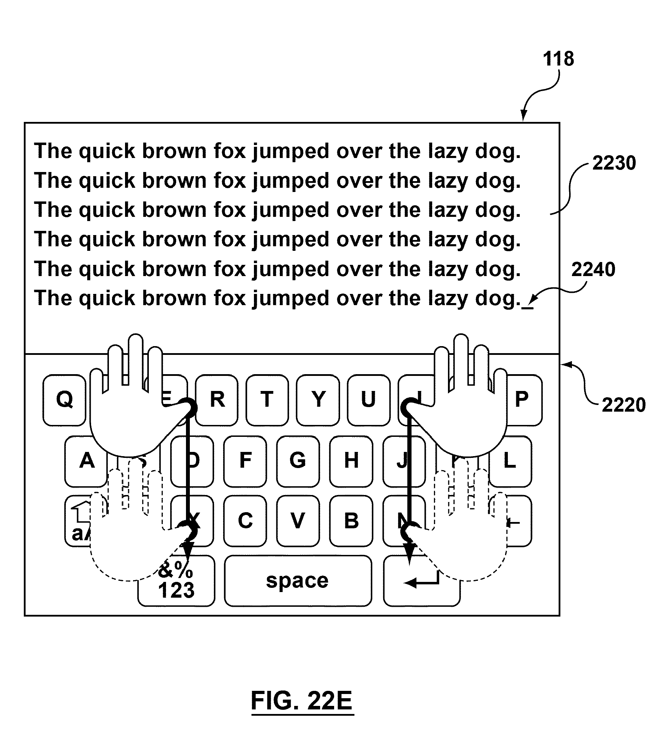

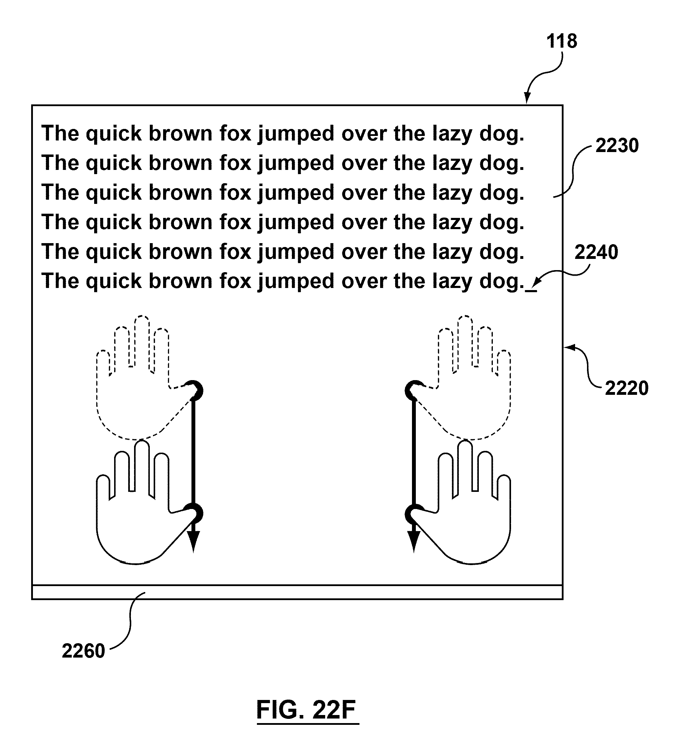

In some examples, the virtual keyboard 2220 may be moved downwards from the bottom of the user interface screen displayed on the touchscreen 118 so that some, or all, of the virtual keyboard 2220 is hidden. As part of the moving, a scrolling animation may be displayed showing the virtual keyboard 2220 scroll or otherwise move off-screen. In some examples, the virtual keyboard 2220 becomes substantially hidden when the virtual keyboard 2220 is moved off-screen. In Fig. 22E, the virtual keyboard 2220 is located at the bottom of the user interface screen displayed on the touchscreen 118 and the user's thumbs are in contact with the touchscreen 118 at a starting position of a downward keyboard move touch gesture. In Fig. 22F, the downward keyboard move touch gesture has been completed and the virtual keyboard 2220 has been hidden or substantially hidden. A visual cue 2260, shown as a horizontal bar, is provided as a hint about the availability of the virtual keyboard 2220. A different from of visual cue 2260 may be provided in other embodiments. The virtual keyboard 2220 may be re-displayed (e.g., re-shown) by performing an upward keyboard move touch gesture having a starting contact point in the area associated with the visual cue 2260. In other examples, a touch-sensitive non-display area may surround a touch-sensitive display area in which the user interface screen of the touchscreen 118 is displayed. In such examples, the visual cue may be omitted and the upward keyboard move touch gesture may be performed with a starting contact point in the non-display area outside of the display area.

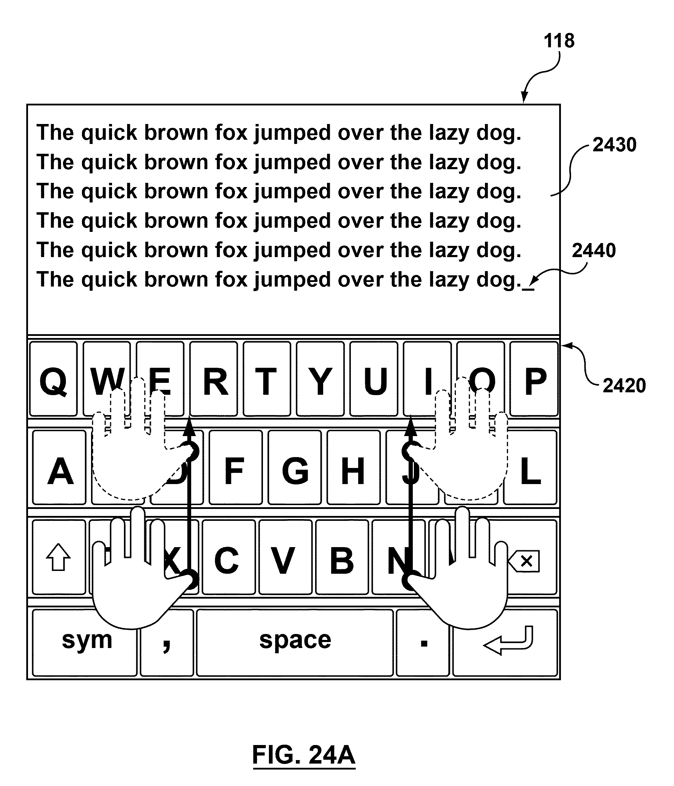

Fig. 24A illustrates another example user interface screen displayed on the touchscreen 118 having a virtual keyboard 2420 displayed below an input field 2430. A string of text "The quick brown fox jumped over the lazy dog...." has been received as input by the touchscreen 118 and displayed in the input field 2430 followed by a cursor 2440, which can be an underscore (as shown) or any other shape, such as a vertical line (or piping symbol) as mentioned previously. In the example of Fig. 24A, the virtual keyboard 2220 is displayed in a default position (or standard position) at the bottom of the user interface screen displayed on the touchscreen 118. A different default position may be used in other examples.

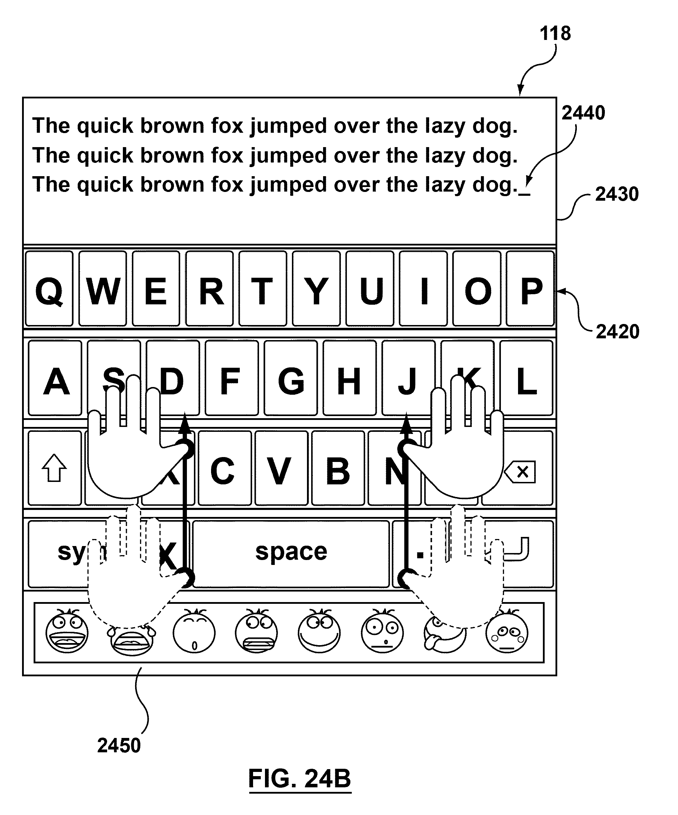

Fig. 24B shows one example of a user interface screen in which the virtual keyboard 2420 is in an adjusted position and additional content is displayed below the virtual keyboard 2420 in its adjusted position. In the shown example of Fig. 24B, the additional content is an emoticon keyboard 2450 including a row of emoticon keys (or icons) corresponding to emoticons which may be used during messaging, for example, during the composition of electronic communications such as email messages and instant messages. Emoticons are pictorial representations of a facial expression typically used to express an emotion or a mood of an author of an electronic communication or a tone associated with text of the electronic communication. Emoticons can be used to provide recipients of the electronic communication with an indication of a tone of the text in the electronic communication and can improve or otherwise change an interpretation of the text in the electronic communication. The emoticon keyboard 2450 is shown in response to performing an upward keyboard move touch gesture, such as an upward two-finger drag gesture, when the virtual keyboard 2420 is in the default position of Fig. 24A.

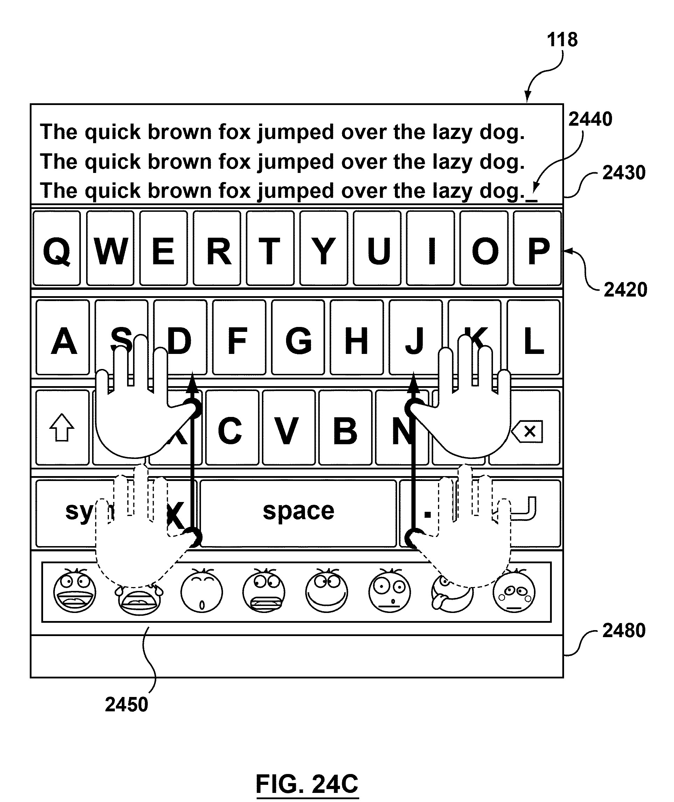

If a further upward keyboard move touch gesture is performed when the additional content is displayed (e.g., when the emoticon keyboard 2450 of the virtual keyboard 2420 is displayed), the virtual keyboard 2420 is moved further upwards to a further adjusted position as shown in Fig. 24C to reveal a continuation input field 2450 which provides a continuation of the input field 2430 such that text continues seamlessly between the input field 2430 and the continuation input field 2450. In some examples, further movement upwards may be possible in response to further upward keyboard move touch gestures.

If a downward keyboard move touch gesture is performed when the virtual keyboard 2420 is in the further adjusted position shown in Fig. 24C, the virtual keyboard is moved to the adjusted position shown in Fig. 24B. If a further downward keyboard move touch gesture is performed when the virtual keyboard 2420 is in the adjusted position shown in Fig. 24B, the additional content (e.g., emoticon keyboard 2450) is hidden and the virtual keyboard 2420 is moved to the default position shown in Fig. 24A. If a further downward keyboard move touch gesture is performed when the virtual keyboard 2420 is in the default position shown in Fig. 24A, the keyboard 2420 is hidden as shown in Fig. 22F described above.

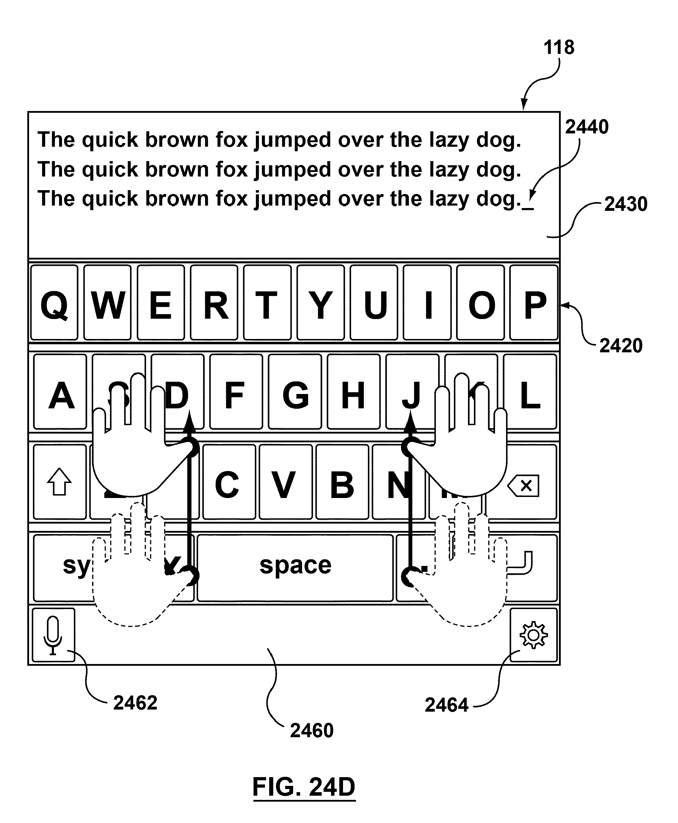

Fig. 24D shows another example of a user interface screen in which the virtual keyboard 2420 is in an adjusted position and additional content is displayed below the virtual keyboard 2420 in its adjusted position. In the shown example of Fig. 24D, the additional content is a menu bar 2460 including a microphone icon 2462 for activating the microphone 130, for example, for use in inputting text via speech-to-text recognition. The menu bar 2460 also includes a settings icon 2464 for invoking a settings menu for changing device settings.

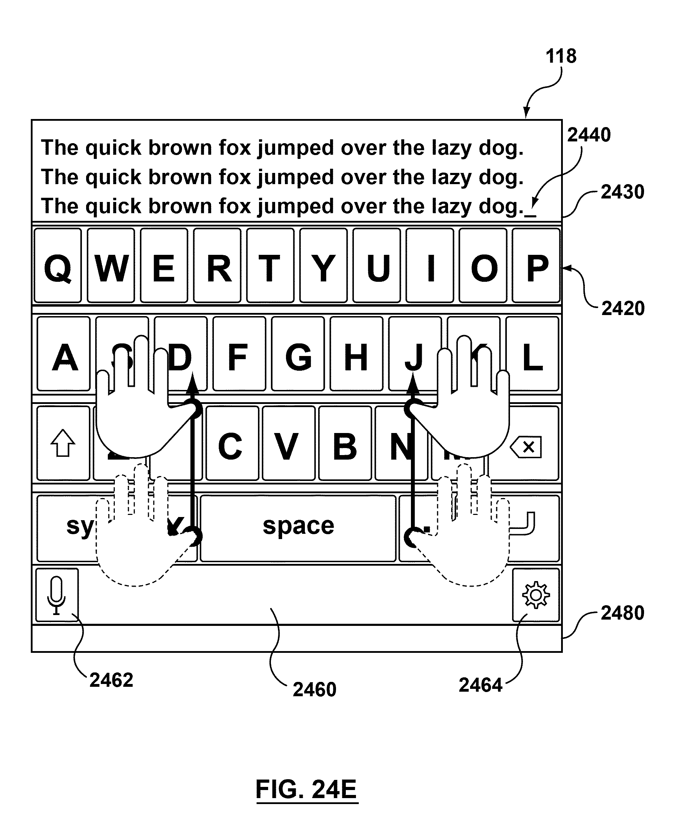

If a further upward keyboard move touch gesture is performed when the additional content is displayed (e.g., when the menu bar 2460 of the virtual keyboard 2420 is displayed), the virtual keyboard 2420 is moved further upwards to a further adjusted position as shown in Fig. 24E to reveal a continuation input field 2450 which provides a continuation of the input field 2430 such that text continues seamlessly between the input field 2430 and the continuation input field 2450. In some examples, further movement upwards may be possible in response to further upward keyboard move touch gestures.

If a downward keyboard move touch gesture is performed when the virtual keyboard 2420 is in the further adjusted position shown in Fig. 24E, the virtual keyboard is moved to the adjusted position shown in Fig. 24D. If a further downward keyboard move touch gesture is performed when the virtual keyboard 2420 is in the adjusted position shown in Fig. 24D, the additional content (e.g., emoticon keyboard 2450) is hidden and the virtual keyboard 2420 is moved to the default position shown in Fig. 24A. If a further downward keyboard move touch gesture is performed when the virtual keyboard 2420 is in the default position shown in Fig. 24A, the keyboard 2420 is hidden as shown in Fig. 22F described above.

In some examples, the keyboard move touch gesture may have a minimum distance to move the virtual keyboard 2220, hide and/or show the virtual keyboard 2220, hide and/or show additional content, or any combination thereof. The minimum distance may be, for example, half of a height of the additional content (i.e., half of a height of the hidden row of keys or hidden menu bar). If the travel distance of the touch input does not exceed the minimum distance, the position of the virtual keyboard 2420 is not adjusted and any additional content is not displayed. When the position of the virtual keyboard 2420 is rendered and displayed in real-time in accordance with travel (i.e., movement) of the touch input during the performance of the keyboard move touch gesture, visual effects such as animation are provided as a visual hint or cue regarding the availability of the keyboard move function and/or additional content, as well as a visual hint or cue regarding the minimum distance of the keyboard move touch gesture.

When the distance of the keyboard move touch gesture does not exceed the minimum distance when the keyboard move touch gesture ends, the virtual keyboard 2420 is moved back to its prior position. As part of the moving of the virtual keyboard 2420, scrolling, sliding or snapping effects (e.g., animation) may be used. When the keyboard move touch gesture ends and the distance of the keyboard move touch gesture exceeds the minimum distance but the additional content is not fully displayed, the virtual keyboard 2420 is moved upwards to an adjusted position which shows the additional content (e.g., hidden row). As part of the moving of the virtual keyboard 2420, scrolling, sliding or snapping effects (e.g., animation) may be used. Similar visual effects may be provided when moving, hiding or showing the virtual keyboard 2420 without displaying additional content.

When the additional content is defined by two or more parts, such as two or more additional rows of keys or two or more menu bars, the real-time rendering and displaying of the virtual keyboard 2420 in accordance with travel (i.e., movement) of the touch input may be temporarily suspended for set number of pixels when each part of the additional content is fully displayed (e.g., the minimum distance has been exceeded) even though movement of the touch input continues. This visual effect, i.e. the temporary lack of movement, provides the impression that the additional content of the virtual keyboard 2420 is "locked". This provides a visual hint or cue that the minimum distance has been exceeded and the additional content which is displayed is "locked" and would remain displayed even if the keyboard move touch gesture were to end. After the travel distance exceeds the set number of pixels for which the real-time rendering and displaying of the virtual keyboard 2420 is temporarily suspended, the real-time rendering and displaying of the virtual keyboard 2420 resumes.

While changes in the configuration of the virtual keyboard have been described as occurring in response to a number of sequential gestural events, in at least some examples, the changes in the configuration of the virtual keyboard may be obtained by a single gesture or fewer gestures. For example, when the virtual keyboard is moved by an amount equal to the travel distance of the touch input during the keyboard move touch gesture, the virtual keyboard may be moved from an adjusted position, possibly with additional content displayed, to being hidden in a single keyboard move gesture of sufficient distance. Similarly, a hidden virtual keyboard may be re-displayed and moved to an adjusted position, possibly with additional content displayed, in a single keyboard move gesture of sufficient distance.

The above-described combination of gesture-action assignments is believed to have potential advantages in several respects, particularly with regards to providing a more natural interaction with the electronic device 100. Providing more natural interaction with the electronic device 100 involves identifying efficient gestures which are relatively easy to perform, relatively easy to remember, have discoverability which allows users to "discover" functions during normal use without formal training, and which can be differentiated from other gestures by users (and by the device) relatively easily. Arbitrary or poorly considered gesture-action assignments tend to create awkward and unnatural user experiences which make the required interaction harder to perform, harder to remember, undiscoverable (or at least less discoverable), and harder to differentiate from other gestures by users.

The above-described combination of gesture-action assignments are believed to be relatively easy to perform, relatively easy to remember, have discoverability which allows users to "discover" functions during normal use without formal training, and which can be differentiated from other gestures by users (and by the device) relatively easily.

While the various methods of the present disclosure have been described in terms of functions shown as separate blocks in the Figures, the functions of the various blocks may be combined during processing on an electronic device. Furthermore, some of the functional blocks in the Figures may be separated into one or more sub steps during processing on an electronic device.

While the present disclosure is described, at least in part, in terms of methods, a person of ordinary skill in the art will understand that the present disclosure is also directed to the various components for performing at least some of the aspects and features of the described methods, be it by way of hardware components, software or any combination of the two, or in any other manner. Moreover, the present disclosure is also directed to a pre-recorded storage device or other similar computer readable medium including program instructions stored thereon for performing the methods described herein.

The present disclosure may be embodied in other specific forms without departing from the subject matter of the claims. The described example embodiments are to be considered in all respects as being only illustrative and not restrictive. The present disclosure intends to cover and embrace all suitable changes in technology. The scope of the present disclosure is, therefore, described by the appended claims rather than by the foregoing description. All changes that come within the meaning and range of equivalency of the claims are intended to be embraced within their scope.

**Claims**

1.  A method for configuring a virtual keyboard on a display, comprising:

    detecting a touch input associated with a location in the virtual keyboard on the display;
    adjusting, when the touch input is a designated touch gesture, a position of the virtual keyboard within a user interface screen in which the virtual keyboard is located in accordance with a direction of the touch input.

2.  The method of claim 1, wherein the adjusting comprises:

    moving the virtual keyboard upwards relative to the user interface screen when an upward touch gesture is detected;
    moving the virtual keyboard downwards relative to the user interface screen when a downward touch gesture is detected.

3.  The method of claim 1 or claim 2, further comprising:

    hiding the virtual keyboard when the virtual keyboard is moved downwards from a bottom of the user interface screen.

4.  The method of claim 3, further comprising:

    displaying a visual cue associated with the hidden virtual keyboard; and
    re-displaying the virtual keyboard when an upward touch gesture having a starting location associated with the visual cue is detected.

5.  The method of any one of claims 1 to 4, wherein an input field is displayed above the virtual keyboard in a default position, wherein a continuation input field is displayed below the virtual keyboard when the virtual keyboard is moved upwards from the default position, wherein text continues seamlessly between the input field and the continuation input field.

6.  The method of claim 5, wherein the default position is a bottom of the user interface screen.

7.  The method of any one of claims 1 to 6, wherein the designated touch gesture is a two-finger drag gesture.

8.  The method of any one of claims 1 to 7, further comprising:

    displaying additional content below the virtual keyboard when the virtual keyboard is moved upwards from a default position.

9.  The method of claim 8, wherein the default position is a bottom of the user interface screen.

10. The method of claim 8 or claim 9, wherein the additional content is one or more additional rows of keys.

**11.** The method of claim 10, wherein the virtual keyboard includes character keys in accordance with an input character set, wherein the input character set is an alphabetic character set and the one or more rows of keys are number keys, symbol keys or a combination of number and symbol keys.

**12.** The method of claim 10, wherein the virtual keyboard includes character keys in accordance with an input character set, wherein the input character set is an alphabetic character set and the one or more rows of keys comprise emoticons.

**13.** The method of claim 8 or claim 9, wherein the virtual keyboard includes character keys in accordance with a first input character set in a first language, wherein the additional content is a menu bar including an icon to change the character keys to a second input character set in a second language.

**14.** The method of claim 8 or claim 9, wherein the additional content is a menu bar including icons for calling or invoking non-keyboard related functions, actions or commands and/or device settings.

**15.** An electronic device, comprising:

a processor;
a display coupled to the processor and having a virtual keyboard displayed thereupon;
wherein the processor is configured to perform the method of any one of claims 1 to 14.

**FIG. 1**

200

Receive input of
character ⟶ 210

Generate set of
characters ⟶ 220

Rank generated set
of characters ⟶ 230

Determine which
generated set of
characters to display ⟶ 240

Display generated set
of characters at or near
corresponding keys ⟶ 250

## FIG. 2

FIG. 3A

**FIG. 3B**

EP 2 660 692 A1

**FIG. 3C**

EP 2 660 692 A1

FIG. 3D

**FIG. 4A**

EP 2 660 692 A1

**FIG. 4B**

EP 2 660 692 A1

**FIG. 5**

**FIG. 6A**

**FIG. 6B**

EP 2 660 692 A1

**FIG. 6C**

**FIG. 7**

EP 2 660 692 A1

**FIG. 8A**

EP 2 660 692 A1

FIG. 8B

FIG. 9

**FIG. 10A**

EP 2 660 692 A1

**FIG. 10B**

EP 2 660 692 A1

FIG. 11A

FIG. 11B

**FIG. 12A**

**FIG. 12B**

**FIG. 13A**

EP 2 660 692 A1

**FIG. 13B**

EP 2 660 692 A1

FIG. 14A

**FIG. 14B**

EP 2 660 692 A1

**FIG. 14C**

EP 2 660 692 A1

FIG. 15

**FIG. 16**

EP 2 660 692 A1

1700

Receive input of
character — 1710

Display generated set of
characters at or near
corresponding keys on
keyboard — 1720

1730

Receive
input of generated
set of
characters?

No → 

Yes ↓

Insert generated set of
characters and <SPACE> — 1740

1750

Punctuation?

No →

Yes ↓

Delete <SPACE> and insert
inputted punctuation — 1760

**FIG. 17**

1800

Receive input of character — 1810

Display generated set of characters at or near corresponding keys on keyboard — 1820

1830
Receive input of generated set of characters?

No

Yes

Insert generated set of characters and <SPACE> — 1840

1850 — Display predicted set of characters on space key

1860
Receive input of generated set of characters?

No

Yes

1870 — Insert predicted set of characters and <SPACE>

FIG. 18

1900

1910

Display predicted set of characters at or near corresponding keys on keyboard

1920

Receive input set of characters?

Yes

Insert set of characters and <SPACE>

1930

No

1940

Receive input of characters

Other process

FIG. 19

FIG. 20

2100

```
┌─────────────────────────────┐
│   Display virtual keyboard   │
│            2120              │
└─────────────────────────────┘
              │
              ▼
         ╱─────────╲          2130
       ╱─────────────╲
      ╱  Detect touch  ╲    No
      ╲     input      ╱ ────────►
       ╲─────────────╱
         ╲─────────╱
              │ Yes
              ▼
         ╱─────────╲          2140
       ╱─────────────╲
      ╱ Touch input    ╲
     ╱corresponds to keyboard╲  No    ┌────────────────────┐
     ╲   move touch        ╱ ──────► │  Perform action    │
      ╲    gesture        ╱          │corresponding to    │
       ╲      ?          ╱           │   touch input      │
         ╲─────────╱                 │       2145         │
              │ Yes                  └────────────────────┘
              ▼
┌─────────────────────────────┐
│     Adjust position of      │
│     virtual keyboard        │
│            2150             │
└─────────────────────────────┘
              │
              ▼
┌─────────────────────────────┐
│    Display additional       │
│        content              │
│            2160             │
└─────────────────────────────┘
```

FIG. 21

53

**118**

**2230**

The quick brown fox jumped over the lazy dog.
The quick brown fox jumped over the lazy dog.
The quick brown fox jumped over the lazy dog.
The quick brown fox jumped over the lazy dog.
The quick brown fox jumped over the lazy dog.
The quick brown fox jumped over the lazy dog.

**2240**

**2220**

| Q | W | E | R | T | Y | U | I | O | P |

| A | S | D | F | G | H | J | K | L |

| ⇧ aA | Z | X | C | V | B | N | M | ← |

| &% 123 | space | ↵ |

**FIG. 22A**

118

2230

2240

The quick brown fox jumped over the lazy dog.
The quick brown fox jumped over the lazy dog.
The quick brown fox jumped over the lazy dog.
The quick brown fox jumped over the lazy dog.
The quick brown fox jumped over the lazy dog.
The quick brown fox jumped over the lazy dog.

2220

Q W E R T Y U I O P

A S D F G H J K L

a/ Z X C V B N M

/o 123   space   ←

**FIG. 22B**

**FIG. 22C**

118

2230

The quick brown fox jumped over the lazy dog.
The quick brown fox jumped over the lazy dog.
The quick brown fox jumped over the lazy dog.
The quick brown fox jumped over the lazy dog.

| Q | W | E | R | T | Y | U | I | O | P |

| A | S | D | F | G | H | J | K | L |

&%
123 | C | V | B | N

space

2220

The quick brown fox jumped over the lazy dog.
The quick brown fox jumped over the lazy dog.

2240

2250

**FIG. 22D**

118

2230

2240

2220

The quick brown fox jumped over the lazy dog.
The quick brown fox jumped over the lazy dog.
The quick brown fox jumped over the lazy dog.
The quick brown fox jumped over the lazy dog.
The quick brown fox jumped over the lazy dog.
The quick brown fox jumped over the lazy dog.

Q   E   R   T   Y   U   J   P

A   D   F   G   H   J   L

a/   X   C   V   B   N

&%
123   space

**FIG. 22E**

118

2230

2240

2220

The quick brown fox jumped over the lazy dog.
The quick brown fox jumped over the lazy dog.
The quick brown fox jumped over the lazy dog.
The quick brown fox jumped over the lazy dog.
The quick brown fox jumped over the lazy dog.
The quick brown fox jumped over the lazy dog.

2260

**FIG. 22F**

(0, y max.)    (x max., y max.)

y

B  A    A  B

θ         θ

C     C

2350A        2350B

(0, 0)   x  (x max., 0)

**FIG. 23**

**FIG. 24A**

**FIG. 24B**

**FIG. 24C**

118

2440

2430

The quick brown fox jumped over the lazy dog.
The quick brown fox jumped over the lazy dog.
The quick brown fox jumped over the lazy dog._

| Q | W | E | R | T | Y | U | I | O | P |

2420

| A | | D | F | G | H | J | | L |

| ⇧ | C | V | B | N | | ⊗ |

| sy | space | ↵ |

| 🎤 | ⚙ |

2462

2464

2460

**FIG. 24D**

**FIG. 24E**

Europäisches
Patentamt

European
Patent Office

Office européen
des brevets

## EUROPEAN SEARCH REPORT

Application Number

EP 12 16 6115

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/242138 A1 (TRIBBLE GUY L [US]) 6 October 2011 (2011-10-06) * paragraphs [0171], [0172] * * figures 5B,C * | 1-3,7,15 | INV. G06F3/048 |
| X | US 2008/318635 A1 (YOON SANG-YEOB [KR] ET AL) 25 December 2008 (2008-12-25) * paragraph [0119] - paragraph [0122] * * figure 7B * | 1-3,7-15 | |
| X | EP 2 128 750 A2 (NTT DOCOMO INC [JP]) 2 December 2009 (2009-12-02) * paragraph [0045] - paragraph [0055] * * figures 10-13 * | 1-4,7,15 | |
| X | EP 2 077 491 A1 (HTC CORP [TW]) 8 July 2009 (2009-07-08) * paragraph [0039] - paragraph [0054] * * figures 4-8 * | 1,2,5-7, 15 | |
| X | WO 2012/043932 A1 (LG ELECTRONICS INC [KR]; KIM JUNGWOO [KR]; CHO SUNGHYUN [KR]; PARK JIH) 5 April 2012 (2012-04-05) * abstract * * figures 28,29 * | 1,2,5-7, 14 | TECHNICAL FIELDS SEARCHED (IPC) G06F H04M |

The present search report has been drawn up for all claims

| Place of search | Date of completion of the search | Examiner |
|---|---|---|
| Berlin | 16 August 2012 | Bengtsson, Johan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.....................................................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.** EP 12 16 6115

This annex lists the patent family members relating to the patent documents cited in the above-mentioned European search report.
The members are as contained in the European Patent Office EDP file on
The European Patent Office is in no way liable for these particulars which are merely given for the purpose of information.

16-08-2012

| Patent document cited in search report | | | Publication date | Patent family member(s) | | | Publication date |
|---|---|---|---|---|---|---|---|
| US 2011242138 | A1 | | 06-10-2011 | US | 2011242138 | A1 | 06-10-2011 |
| | | | | WO | 2011123353 | A1 | 06-10-2011 |
| US 2008318635 | A1 | | 25-12-2008 | NONE | | | |
| EP 2128750 | A2 | | 02-12-2009 | CN | 101593033 | A | 02-12-2009 |
| | | | | EP | 2128750 | A2 | 02-12-2009 |
| | | | | JP | 2009288873 | A | 10-12-2009 |
| | | | | US | 2009295750 | A1 | 03-12-2009 |
| EP 2077491 | A1 | | 08-07-2009 | EP | 2077491 | A1 | 08-07-2009 |
| | | | | TW | 200928878 | A | 01-07-2009 |
| | | | | US | 2009167716 | A1 | 02-07-2009 |
| WO 2012043932 | A1 | | 05-04-2012 | KR | 20120034513 | A | 12-04-2012 |
| | | | | WO | 2012043932 | A1 | 05-04-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 37335611 A

- US 20070097096 A